(19) Europäisches Patentamt / European Patent Office / Office européen des brevets

(11) **EP 1 967 450 B1**

(12) **FASCICULE DE BREVET EUROPEEN**

(45) Date de publication et mention
de la délivrance du brevet:
**14.07.2010 Bulletin 2010/28**

(51) Int Cl.:
***B64G 1/24*** *(2006.01)*        ***B64G 1/26*** *(2006.01)*
***B64G 1/38*** *(2006.01)*        *B64G 1/40* *(2006.01)*
*B64G 1/44* *(2006.01)*

(21) Numéro de dépôt: **08101800.4**

(22) Date de dépôt: **20.02.2008**

(54) **Commande d'actionneur réduisant le niveau de vibrations d'une structure flexible associée**

Steuerung eines Aktuators zum Reduzieren des Vibrationsniveaus einer zugeordneten flexiblen Struktur

Actuator control reducing the level of vibration in an associated flexible structure

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.03.2007 FR 0701580**

(43) Date de publication de la demande:
**10.09.2008 Bulletin 2008/37**

(73) Titulaire: **Astrium SAS**
**75016 Paris (FR)**

(72) Inventeur: **Guyot, Philippe**
**31500, Toulouse (FR)**

(74) Mandataire: **Cabinet Plasseraud**
**52, rue de la Victoire**
**75440 Paris Cedex 09 (FR)**

(56) Documents cités:
**EP-A- 0 319 120      EP-A2- 0 251 692**
**US-A- 5 610 848      US-A1- 2004 049 527**

**Description**

La présente invention concerne un procédé et dispositif de commando d'au moins un système mécanique présentant au moins un élément de structure flexible et au moins un actionneur ou groupe d'actionneurs, lesdits procédé et dispositif étant destinés à réduire le niveau de vibrations dudit élément de structure flexible tout en commandant ledit actionneur ou groupe d'actionneurs, de sorte à atteindre au moins un objectif assigné audit système mécanique, tel que réaliser un déplacement.

Des procédés et systèmes analogues sont décrits dans les documents EP 0 251 692 ; US 5,601,848 ; et US 2004/0049527.

Quelques exemples issus de l'état de la technique et des solutions connues qui visent à répondre à ce problème sont considérés ci-dessous. Une première illustration concerne le contrôle d'orbite d'un engin spatial, par exemple un satellite de télécommunication de quelques tonnes que l'on souhaite positionneur précisément au voisinage d'un point donné de l'orbite géostationnaire, une fois à poste. Dans le cas d'un satellite à propulsion chimique, des corrections d'orbite doivent être effectuées à intervalles de temps réguliers (typiquement une fois tous les quinze jours), sous forme d'incréments de vitesse (typiquement de 1 à 2 m/s) devant être imprimées au satellite dans chacune des directions tangente à l'orbite et perpendiculaire au plan de l'orbite. Dans le cas considéré ici, ces incréments de vitesse sont réalisés physiquement grâce au système de propulsion monté à bord du satellite, par expulsion de gaz dans des tuyères, l'incrément de vitesse total devant être réalisé étant de 50 m/s par an. Le système de contrôle du satellite calcule, selon un algorithme pré-défini, les ordres d'ouverture à envoyer aux vannes d'éjection de gaz des différentes tuyères afin de réaliser l'incrément de vitesse désiré. Un incrément de vitesse selon une direction donnée peut être réalisé, suivant le principe d'action-réaction, en commandant l'ouverture de la ou des vannes d'une ou plusieurs tuyères éjectant du gaz dans la direction opposée à l'incrément de vitesse désiré.

Dans le cas général couvrant la plupart des missions spatiales, les incréments de vitesse à imprimer aux satellites et sondes spatiales pour le contrôle d'orbite s'échelonnent typiquement de quelques cm/s à quelques centaines de m/s.

Dans la très grande majorité des applications spatiales, la commande d'ouverture des vannes est une commande en tout ou rien et non une commande proportionnelle. De ce fait, la poussée résultant de l'ouverture d'une vanne est approximativement constante (de l'ordre de 1 à 20 Newton dans le cas du contrôle d'orbite de satellites de télécommunication, de quelques dixièmes à quelques centaines de Newton dans le cas général). Le contrôle de l'incrément de vitesse réalisé s'effectue en boucle ouverte, à partir d'un modèle de poussée des tuyères, en contrôlant la durée totale d'ouverture des vannes de chaque tuyère active. Le plus simple consiste à commander l'ouverture des vannes de façon continue pendant le temps juste nécessaire pour réaliser la totalité de l'incrément de vitesse désiré, typiquement quelques centaines de secondes dans le cas considéré. Cependant, l'ouverture continue d'une ou plusieurs vannes pendant une telle durée n'est pas recommandée, car les couples perturbateurs résultant des mésalignements des jets des tuyères par rapport à leur orientation nominale pourraient dépasser la limite admissible et engendrer des dépointages transitoires du satellite et de ses charges utiles allant au-delà de la limite autorisée par la mission (typiquement 0.05 à 0.1 degré pour l'application considérée).

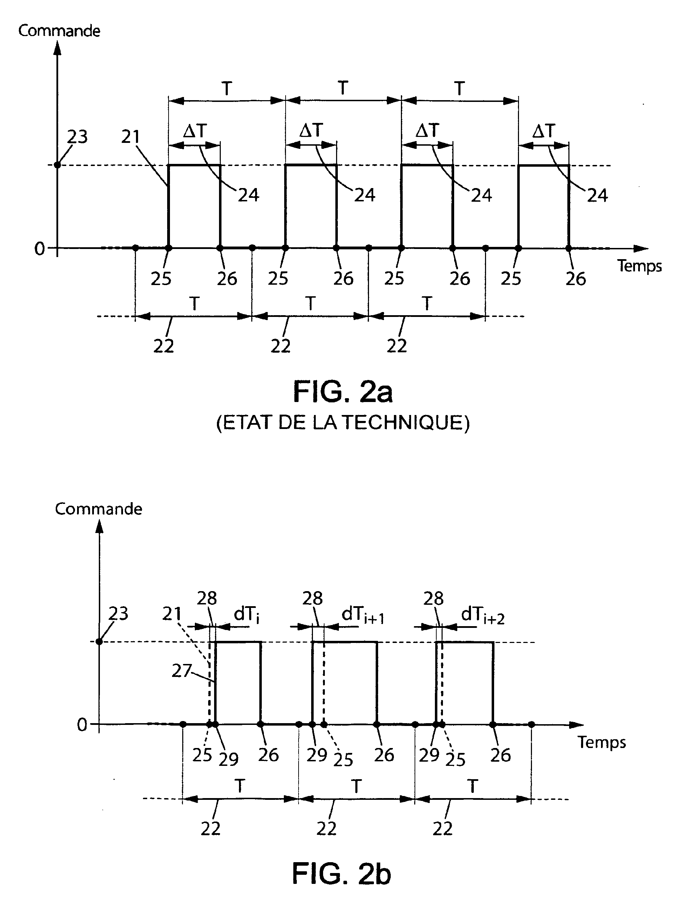

Suivant l'état de l'art, afin de remédier à ce problème, l'incrément de vitesse est réalisé non pas d'un coup, en totalité, en ouvrant en continu les tuyères concernées pendant le laps de temps juste nécessaire, mais plutôt par une succession de petits incréments répartis sur un laps de temps plus important, typiquement deux à quatre fois la durée juste nécessaire dans le cas d'une poussée continue. L'effet produit est en moyenne équivalent à une diminution d'un même facteur de la poussée équivalente imprimée au satellite pendant la manoeuvre (réduisant d'autant l'effet transitoire néfaste des couples perturbateurs), ce qui ne peut être produit par une ouverture partielle des vannes du système de propulsion qui, rappelons-le, travaillent selon nos hypothèses en tout ou rien. De façon pratique, suivant l'état de l'art, les ordres de commande d'ouverture des tuyères sont échantillonnés à une période d'échantillonnage T. Dans chaque intervalle d'échantillonnage compris entre deux instants d'échantillonnage successifs, chaque vanne de tuyère active est commandée périodiquement à la période T en position ouverte dans un intervalle de temps de durée $\Delta T$ strictement inférieure à la période d'échantillonnage T, et typiquement égale à une fraction entière de T. Pour des raisons qui apparaîtront ci-après, l'ordre d'ouverture des vannes est de préférence centré au milieu de l'intervalle d'échantillonnage. Ainsi, si on considère conventionnellement que la commande envoyée au système d'ouverture de chaque vanne est égale à 1 pour commander une ouverture totale, et 0 pour commander une fermeture totale, le signal de commande envoyé à chaque vanne du système de propulsion a la forme d'une succession périodique, de période T, de petits incréments de valeur 1 et de durée $\Delta T$ centrés au milieu des intervalles d'échantillonnage, la commande étant nulle en dehors de ces durées $\Delta T$ (voir ci-après l'exemple de la figure 2a).

Il est à noter que la période d'échantillonnage T doit être choisie la plus grande possible (typiquement quelques secondes) afin de minimiser, pendant la durée de vie du satellite qui est de l'ordre de quinze ans, le nombre total de transitoires ouverture/fermeture des vannes de tuyères qui sont sensibles à ce paramètre. Par ailleurs, cette période d'échantillonnage doit être suffisamment grande pour que les incréments à réaliser soient d'un ordre de grandeur plus grand que la durée minimum d'ouverture des tuyères (ce qu'on appelle le Minimum Impulse Bit), en dessous de laquelle il y a une perte notable d'efficacité et une surconsommation de carburant importante.

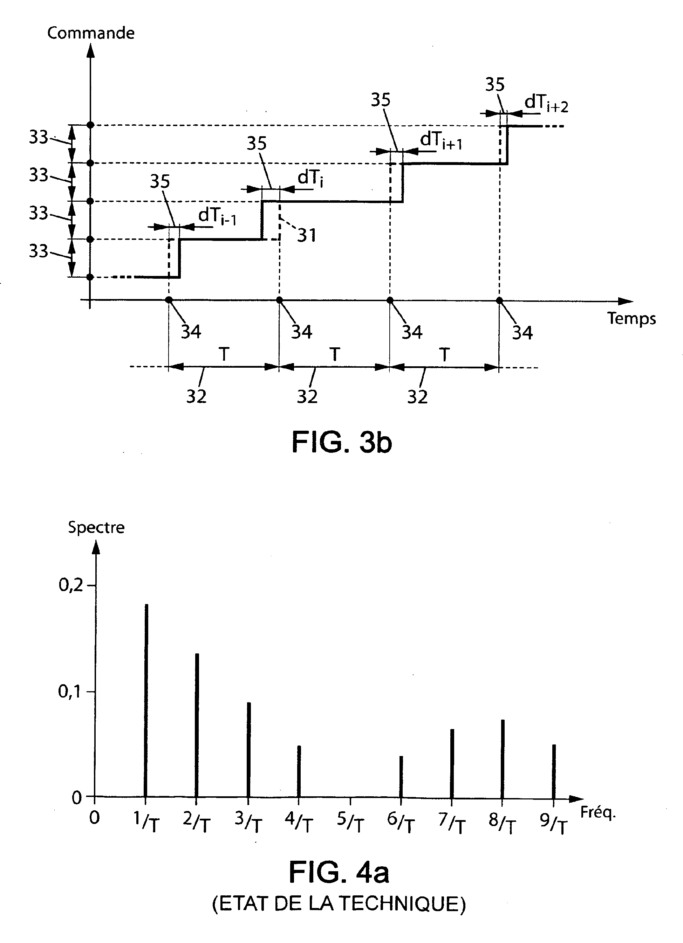

L'avantage d'un tel procédé connu est donc d'étaler la réalisation de l'incrément de vitesse sur une durée plus grande d'un facteur T/ΔT que la durée juste nécessaire dans le cas d'une ouverture en continu des tuyères, ce qui a pour effet moyen de diminuer du même facteur la poussée équivalente imprimée au satellite, et donc de réduire d'autant les transitoires indésirables dus aux couples perturbateurs. Cependant, en contre partie de cet avantage décisif qu'il s'agit de conserver, ce procédé suivant l'état de l'art présente une limitation importante, qui peut affaiblir, voire annuler le bénéfice escompté. Cette limitation est due au caractère périodique de la commande d'ouverture des vannes ainsi créé par l'étalement de la manoeuvre tel qu'expliqué précédemment. Par exemple, pour des valeurs T = 1 seconde et ΔT = 0.2 seconde, la figure 4a (décrite ci-après) présente le spectre de Fourier du profil de commande selon l'état de l'art présenté ci-dessus. Ce spectre montre que l'énergie de la commande est concentrée sur les multiples entiers k/T de la fréquence d'échantillonnage, entraînant un risque de résonance entre les incréments de poussée imprimés au satellite pendant la manoeuvre et les modes de vibration d'éléments flexibles, comme, par exemple, les grands générateurs solaires, d'autant que la fréquence d'échantillonnage 1/T est relativement basse, pour les raisons expliquées plus haut. Il faut insister sur le fait qu'une telle résonance entre une commande en boucle ouverte de réalisation d'incréments de vitesse et des modes flexibles de grands appendices comme des générateurs solaires peut être extrêmement néfaste, du fait que ces modes flexibles sont très faiblement amortis (facteur d'amortissement de l'ordre de 0,001).

Suivant l'état de l'art, on cherche à compenser cet effet en sélectionnant une fréquence d'échantillonnage 1/T telle que ses multiples entiers soient tous suffisamment éloignés des fréquences des modes flexibles des générateurs solaires afin d'éviter toute coïncidence ou rapprochement néfaste. Cependant, ces fréquences de modes flexibles sont connues avec une incertitude importante de l'ordre de 10 à 20 %, surtout pour les hautes fréquences, ce qui en pratique ne permet pas de réduire le risque de coïncidence. De plus, la densité des modes flexibles peut être telle qu'il soit impossible de trouver un bon emplacement entre ces modes. Enfin, il serait avantageux d'augmenter la fréquence d'échantillonnage afin de repousser le problème de coïncidence vers des fréquences plus hautes, là où l'énergie des modes flexibles est moins importante et leurs effets plus limités, mais cette augmentation est contrainte par les effets indiqués précédemment (nombre de cycles ouverture/fermeture des tuyères, perte d'efficacité induite par des incréments trop courts).

Suivant l'état de l'art, on peut également chercher à augmenter la bande passante du contrôle d'attitude du satellite afin de contrôler au moins les premiers modes des appendices flexibles et ainsi réduire l'effet néfaste des éventuelles résonances. Cependant, cette solution est également limitée par plusieurs facteurs : niveau d'autorité de contrôle disponible (problème de saturation), risque de déstabilisation du contrôle d'attitude qui doit gérer un grand nombre de modes flexibles mal connus et très peu amortis, risque subsistant de résonance avec des modes flexibles situés en dehors de la bande passante du contrôle d'attitude.

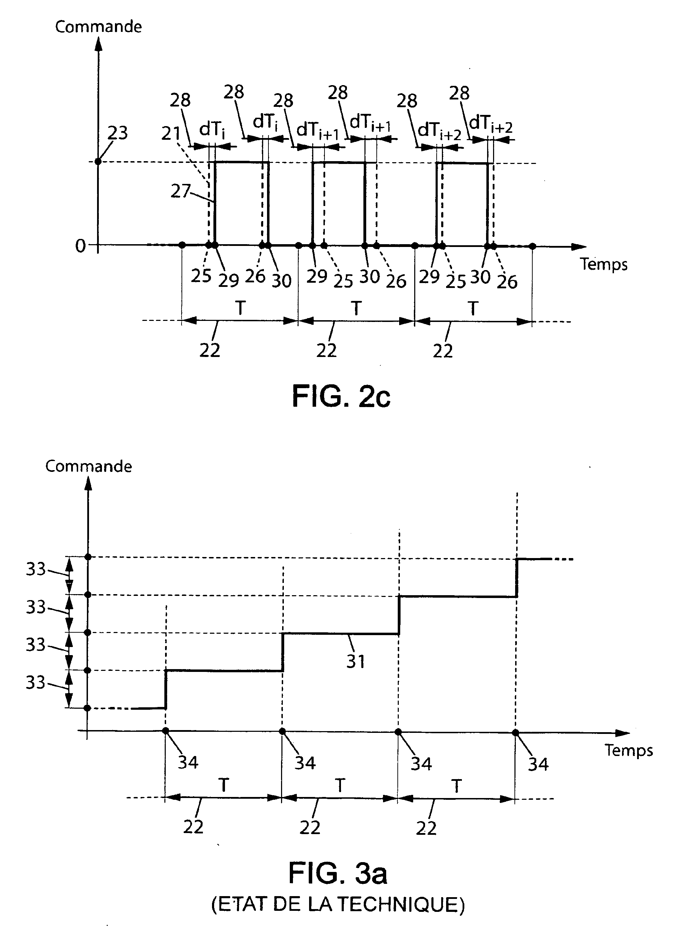

Un autre exemple d'approche conventionnelle concerne le pointage de grande charge utile présentant des modes flexibles d'assez basse fréquence. C'est le cas, par exemple, de la mise en rotation des grands générateurs solaires de satellites de télécommunication comme ceux précédemment évoqués, qui doivent exécuter un tour en 24 heures par rapport à la plate-forme du satellite afin de rester pointés vers le soleil tout au long de l'orbite, alors que le satellite reste pointé vers la Terre. Ces générateurs solaires sont mis en rotation par des moteurs pas à pas. La commande de ces moteurs est échantillonnée à une période T. Toutes les T secondes, une commande d'incrément angulaire est envoyée au moteur afin de réaliser la rotation souhaitée (comme décrit ci-après en référence à la figure 3a). Les incréments ont nominalement la même valeur. Là encore, du fait de la périodicité des incréments, il y a un risque éventuel de résonance entre la commande et les modes flexibles de l'organe mécanique commandé.

En réponse aux limitations de l'état de l'art mentionnées ci-dessus, l'objet de la présente invention est de fournir un procédé de commande d'au moins un système mécanique comportant au moins un élément de structure flexible et au moins un actionneur ou groupe d'actionneurs commandé au moyen d'un signal de commande de façon à atteindre au moins un objectif assigné audit système mécanique, ledit procédé étant destiné à réduire le niveau de vibration dudit élément de structure flexible provoqué par l'activation dudit actionneur ou groupe d'actionneurs.

A cet effet, l'invention propose un procédé de commande d'au moins un système mécanique présentant au moins un élément de structure flexible et au moins un actionneur ou groupe d'actionneurs, ledit procédé étant destiné à réduire le niveau de vibrations dudit élément de structure flexible tout en commandant ledit actionneur ou groupe d'actionneurs de sorte à atteindre au moins un objectif assigné audit système mécanique, tel que réaliser un déplacement, ladite commande étant constituée d'incréments devant être réalisés à une période T dite période d'échantillonnage, chacun desdits incréments étant constant en amplitude dans un intervalle de temps dit intervalle d'échantillonnage s'étendant entre deux instants d'échantillonnage successifs et chacun desdits incréments s'appliquant pendant un intervalle d'application d'incrément d'une durée inférieure ou égale à ladite période d'échantillonnage T, ledit procédé étant caractérisé en ce que, dans chaque intervalle d'échantillonnage, l'un au moins des instants initial et final d'application dudit incrément est modifié par l'ajout d'un écart temporel dT variable, aléatoire ou pseudo-aléatoire, dit écart aléatoire.

Ce qu'on entend précisément par écart aléatoire, en relation avec un intervalle d'échantillonnage respectif, est donc une valeur respective d'une suite discrète de valeurs aléatoires ayant avantageusement la même loi de probabilité, et étant avantageusement indépendantes statistiquement les unes des autres.

Cependant, étant donnée une loi de probabilité définie mathématiquement, la réalisation par un programme informatique connu de valeurs aléatoires obéissant à cette loi de probabilité idéale conduit à une suite de nombres qui ont des propriétés statistiques se rapprochant de ladite loi de probabilité idéale, sans toutefois y obéir parfaitement. Une telle suite de nombres est dite « pseudo-aléatoire », et on attribue à ces nombres, par abus de langage, la loi de probabilité idéale dont ils sont censés être issus.

L'intérêt du procédé selon l'invention est le suivant. La commande nominale (avant application du procédé de l'invention) est une répétition d'incréments (qui, dans le cas général, peuvent ne pas être tous parfaitement égaux) à une période T. Même si ce signal de commande n'est pas forcément parfaitement périodique (incréments non égaux, imperfections de réalisation, etc), il a néanmoins un fort contenu fréquentiel centré sur la fréquence d'échantillonnage 1/T et ses harmoniques, ce qui conduit aux risques mentionnés ci-dessus. L'ajout selon l'invention d'un « écart aléatoire », selon la définition ci-dessus, à au moins un instant d'application des incréments de la commande permet de modifier le contenu fréquentiel de la commande en atténuant son caractère périodique. Suivant la loi de probabilité choisie, tout ou partie des pics d'énergie centrés sur les multiples entiers de la fréquence d'échantillonnage 1/T seront atténués, voire supprimés, comme cela est décrit ci-après pour des exemples particuliers. La loi de probabilité de l'écart aléatoire est choisie à bon escient, pour minimiser les pics d'énergie en priorité là où les résonances pourraient être les plus préjudiciables, c'est-à-dire proches des fréquences de vibration des éléments flexibles du système mécanique.

L'homme de l'art peut aisément généraliser le procédé de l'invention lorsque, non pas la commande elle-même, mais une de ses dérivées temporelles possède le profil temporel objet du procédé (suite périodique d'incréments). Dans ce cas, le procédé peut être appliqué à ladite dérivée possédant ces caractéristiques, et la commande est calculée comme l'intégrale d'ordre correspondant de cette dérivée modifiée.

Selon une réalisation particulière de l'invention, pour chaque intervalle d'échantillonnage, la durée d'application desdits incréments est égale à la période d'échantillonnage T, et un écart aléatoire selon l'invention est ajouté à l'instant initial d'application desdits incréments (l'instant final d'un incrément étant l'instant initial du suivant).

Selon une autre réalisation particulière de l'invention, pour chaque intervalle d'échantillonnage, la durée d'application desdits incréments est strictement inférieure à la période d'échantillonnage T, et un écart aléatoire est ajouté soit à l'instant initial, soit à l'instant final, soit aux deux instants initial et final d'application desdits incréments, avec des valeurs pouvant être différentes dans ce dernier cas.

En variantes de la réalisation précédente, dans chaque intervalle d'échantillonnage, le même écart aléatoire peut être ajouté à la fois à l'instant initial et à l'instant final d'application desdits incréments, ce qui a pour effet de translater dans le temps l'ensemble de l'incrément ou créneau de commande devant être réalisé, d'une valeur égale à l'écart aléatoire appliqué.

Comme expliqué précédemment, il est avantageux de définir la loi de probabilité choisie pour déterminer ledit écart aléatoire de sorte à modifier au moins un des pics d'énergie de la commande, en diminuant, déplaçant ou supprimant au moins un des pics d'énergie indésirables, et en particulier ceux qui coïncident, ou sont proches des fréquences propres d'éléments flexibles du système mécanique considéré.

Avantageusement, la valeur absolue maximum de l'écart aléatoire est inférieure à une valeur fixée, de préférence une fraction entière de la période d'échantillonnage, de sorte que l'incrément modifié par l'écart aléatoire puisse être réalisé entièrement à l'intérieur de son intervalle d'échantillonnage, sans déborder sur le suivant.

Dans la plupart des cas, l'écart aléatoire est à moyenne nulle, de sorte que l'effet moyen de la commande modifiée selon le procédé de l'invention soit le même que celui de la commande initiale ou nominale.

Pour des raisons pratiques d'implantation informatique, on peut sélectionner les valeurs de l'écart aléatoire parmi les multiples entiers d'une valeur pré-définie T', celle-ci pouvant être un diviseur entier de la période d'échantillonnage T.

Dans ce cas, la fréquence 1/T' peut être choisie de sorte à limiter les éventuelles résonances avec les modes de vibrations dudit élément de structure flexible, et de préférence en ne coïncidant pas avec les fréquences propres desdits modes de vibrations.

Afin de simplifier la réalisation pratique de l'invention, une loi de probabilité choisie pour déterminer ledit écart aléatoire est entièrement définie par un nombre fini de paramètres calculés de sorte à modifier au moins un des pics d'énergie de la commande.

Dans une réalisation particulière de l'invention suivant ce principe général, la loi de probabilité déterminant ledit écart aléatoire est une loi de probabilité discrète à M valeurs, ces M valeurs et leurs probabilités étant calculées de sorte à modifier au moins un des pics d'énergie de la commande.

Par exemple, la loi de probabilité déterminant ledit écart aléatoire est une loi binomiale, prenant des valeurs extrêmes d'écart aléatoire +dTmax avec une probabilité de 1/2, et -dTmax avec une probabilité de 1/2. Dans le cas d'une translation aléatoire des incréments, l'effet est de diminuer l'énergie de la commande aux fréquences k/T, multiples entières de la fréquence d'échantillonnage 1/T, dans un rapport $\cos(\omega.dTmax)$ où $\omega = 2.\pi.k/T$, et k est un nombre entier naturel.

Dans une autre réalisation, la loi de probabilité déterminant l'écart aléatoire est une loi discrète à M valeurs équiprobables en progression arithmétique entre une valeur minimale -dTmax et une valeur maximale +dTmax des écarts aléatoires, avec dTmax = T.(M-1)/2M. Dans le cas d'une translation aléatoire des incréments, l'effet est que le spectre de la commande ne peut pas comporter de raies aux fréquences 1/T, 2/T, ... (M-1)/T, ainsi que (Mp+1)/T, (Mp+2)/T, ... (Mp+M-1)1T où p est un entier naturel.

On peut également choisir comme loi de probabilité pour déterminer l'écart aléatoire selon le procédé de l'invention, une loi uniforme entre des valeurs extrêmes d'écart aléatoires dTmin et dTmax, les valeurs dTmin et dTmax étant choisies pour modifier au moins un pic d'énergie de la commande.

Plus particulièrement, on peut choisir, comme loi de probabilité déterminer l'écart aléatoire, une loi uniforme entre des valeurs maximales -dTmax et dTmax. Dans le cas d'une translation aléatoire des incréments, l'effet est de diminuer l'énergie de la commande aux fréquences k/T multiples entières de la fréquence d'échantillonnage 1/T, dans un rapport $\sin(\omega.dTmax) / (\omega.dTmax)$ où $\omega = 2.\pi.k/T$.

Dans ce dernier cas, on peut choisir dTmax = T/2, de sorte que le spectre fréquentiel de la commande ne comporte pas de raie à la fréquence d'échantillonnage 1/T.

Un autre choix peut être dTmax = T/4, de sorte que le spectre fréquentiel de la commande ne comporte pas de raie aux fréquences multiples impaires de la fréquence d'échantillonnage 1/T.

A des fins d'implantation numérique du procédé, les écarts aléatoires selon l'invention peuvent prendre les valeurs de nombres successifs d'au moins une séquence aléatoire ou pseudo-aléatoire de nombres produite à chaque période d'échantillonnage par au moins un programme informatique générateur de nombres aléatoires ou pseudo-aléatoires.

La mise en oeuvre du procédé est encore plus simple si les écarts aléatoires selon le procédé prennent les valeurs de nombres successifs d'une séquence longue mais finie de nombres présentant des caractéristiques pseudo-aléatoires ou aléatoires proches de caractéristiques désirées, ladite séquence étant pré-calculée et appliquée suivant le procédé, puis reproduite en boucle une fois qu'elle est achevée.

L'invention a simultanément pour objet un produit programme d'ordinateur comprenant des instructions de code adaptées à la mise en oeuvre du procédé selon l'invention et tel que défini ci-dessus, lorsqu'il est chargé et exécuté sur des moyens informatiques.

De plus, un dispositif de mise en oeuvre du procédé selon l'invention comprend des moyens de calcul et informatiques permettant l'exécution du produit programme selon l'invention et tel que défini ci-dessus, et des moyens électriques et/ou électroniques permettant de transformer des ordres de commande numériques élaborés par les moyens de calcul et informatiques en signaux électriques envoyés à au moins un actionneur, ledit dispositif étant tel que:

- au moins un programme informatique dudit produit programme est mis en oeuvre par lesdits moyens de calcul et informatiques pour produire lesdits incréments de ladite commande d'au moins un desdits actionneur et groupe d'actionneurs dudit système mécanique de sorte à atteindre au moins un objectif assigné audit système mécanique, tel que réaliser un déplacement ;

- ledit programme informatique est mis en oeuvre pour produire, à chaque période d'échantillonnage T, ledit écart aléatoire suivant une loi de probabilité se rapprochant au mieux d'une loi de probabilité désirée

- ledit programme informatique est mis en oeuvre pour modifier, à chaque période d'échantillonnage, le ou les instants d'application dudit incrément en lui ajoutant ledit écart aléatoire selon le procédé de l'invention et produire ainsi la commande numérique à appliquer effectivement audit système mécanique, et

- lesdits moyens électriques et/ou électroniques transforment ladite commande numérique produite par ledit programme informatique en signaux électriques permettant à au moins un desdits actionneur et groupe d'actionneurs de réaliser physiquement la commande assignée.

Dans le cas où la commande selon le procédé de l'invention est modifiée en utilisant une séquence longue mais finie d'écarts aléatoires ayant les caractéristiques aléatoires désirées, ladite séquence est calculée préalablement, puis avantageusement stockée dans une mémoire desdits moyens de calcul et informatiques dudit dispositif, ces écarts aléatoires étant, successivement et suivant un ordre établi, ajoutés à au moins un instant d'application desdits incréments de ladite commande, ladite séquence étant reproduite en boucle une fois qu'elle est achevée.

Il peut être avantageux qu'au moins une partie des paramètres intervenant dans le calcul des écarts aléatoires par ledit programme informatique dudit dispositif, tels que les paramètres d'une loi de probabilité, ou une séquence de valeurs aléatoires, peut être modifiée au cours du fonctionnement dudit système mécanique, afin par exemple d'optimiser l'efficacité du procédé (si on bénéficie d'une connaissance a posteriori des modes de vibration des éléments flexibles du système, et en particulier leur fréquence propre).

Par exemple, le dispositif de mise en oeuvre du procédé selon l'invention peut être tel qu'il comprend au moins un capteur dédié de mesure des vibrations d'au moins un élément de structure flexible présent dans le système mécanique, des moyens de calcul du spectre fréquentiel de ces vibrations, et des moyens de modification de paramètres intervenant dans le calcul desdits écarts aléatoires afin de réduire le niveau desdites vibrations en modifiant au moins un des pics d'énergie du spectre fréquentiel de la commande.

Comme déjà évoqué, le procédé de l'invention s'applique à la commande d'ouverture d'au moins une tuyère d'un système de contrôle d'orbite, de stabilisation et/ou d'orientation d'un engin se déplaçant dans l'espace, tel que lanceur, satellite artificiel, sonde interplanétaire, etc, ledit engin comportant au moins un élément de structure flexible, tel de grands appendices, antenne, panneau solaire et structure primaire, etc.

Plus précisément, cette application du procédé de l'invention consiste à :

- commander l'ouverture d'au moins une tuyère afin d'imprimer audit engin un incrément de vitesse permettant de corriger la trajectoire dudit engin ;

- réaliser nominalement cet incrément de vitesse en une suite de petits incréments effectués périodiquement à une période T ;

- réaliser lesdits petits incréments par la commande d'ouverture d'au moins une tuyère, ladite commande étant conventionnellement égale à 0 pour un ordre de fermeture de tuyère, et à 1 pour un ordre d'ouverture de tuyère ;

- avant la mise en oeuvre dudit procédé, calculer une commande dite nominale de façon à être périodique de période T dans l'intervalle de temps $[Ti, Ti + N.T]$, où N est un nombre entier, de réalisation d'une impulsion totale, et, dans cet intervalle de temps, égale à un incrément de 1 sur tous les intervalles de temps $[Ti + k.T + T1, Ti + k.T + T2]$, où k est un nombre entier inférieur à N, T1 et T2 étant des constantes telles que $0<T1<T2<T$, T2-T1 étant la largeur du créneau de commande réalisant lesdites petites impulsions, et égale à 0 le reste du temps ;

- modifier ladite commande nominale selon ledit procédé, en ajoutant à l'un au moins des instants d'application initial $Ti + k.T + T1$ et final $Ti + k.T + T2$ de l'incrément, un écart temporel aléatoire ayant des caractéristiques désirées dans le but de minimiser les résonances de ladite commande avec les modes de vibration dudit élément de structure flexible ;

- dans le cas où un écart aléatoire est appliqué aux deux instants initial et final d'application de l'incrément, ledit écart aléatoire pouvant être le même pour lesdits deux instants, auquel cas le créneau de commande est simplement translaté aléatoirement dans le temps, ou bien pouvant être différent pour l'un de ce qu'il est pour l'autre desdits deux instants.

L'homme de l'art comprend que le procédé général selon l'invention a trait à la réalisation d'une commande en boucle ouverte du système mécanique ou d'une partie au moins du système mécanique, comme par exemple des ordres d'ouverture de tuyère(s) permettant de réaliser en boucle ouverte un incrément de vitesse pour corriger l'orbite d'un satellite. Cependant, à cette commande en boucle ouverte s'ajoute, le plus souvent, une commande en boucle fermée, permettant de corriger de petits écarts par rapport à une consigne donnée. Dans le cas du contrôle d'orbite par exemple, il est nécessaire de contrôler l'attitude du satellite lors de la réalisation de l'incrément de vitesse, afin que cet incrément s'effectue dans la direction souhaitée par rapport à l'orbite. Dans cette phase, les tuyères sont également utilisées pour effectuer ce contrôle d'attitude en boucle fermée. En fait, les deux commandes boucle ouverte pour la réalisation de l'incrément de vitesse, et boucle fermée pour le contrôle d'attitude, sont additionnées avant d'être envoyées au système de propulsion. De façon pratique, les ordres de contrôle d'attitude en boucle fermée se présentent eux-mêmes sous la forme d'incréments commandant l'ouverture de tuyères pendant un certain laps de temps, en général petit par rapport aux temps d'ouverture du contrôle d'orbite. Or, les deux types d'incréments ne peuvent pas s'additionner dans ce cas, puisque la tuyère ne peut être commandée qu'en tout ou rien. De ce fait, les incréments doivent être disjoints dans le temps. En général, les incréments de contrôle d'attitude sont réalisés au tout début des intervalles d'échantillonnage, et comme ils sont de très courte durée, cela laisse du temps dans chaque intervalle d'échantillonnage pour réaliser les incréments de contrôle d'orbite, d'autant que ceux-ci sont avantageusement centrés au milieu de l'intervalle d'échantillonnage, comme suggéré en début de l'exposé.

Dans une réalisation alternative selon l'invention, également avantageuse, les incréments de commande servant au contrôle d'attitude en boucle fermée ne sont pas effectués au début de l'intervalle d'échantillonnage, mais sont accolés aux incréments de commande du contrôle d'orbite. Dans ce cas, l'application du procédé de l'invention est telle qu'en plus desdits écarts aléatoires, on ajoute à un seul des instants initial et final d'application de l'incrément un autre écart temporel, calculé de manière connue pour réaliser un contrôle d'attitude ou de pointage de l'engin spatial en même temps que l'on réalise la commande d'incrément de vitesse pour le contrôle d'orbite.

Généralement, cet écart temporel supplémentaire est petit (typiquement d'un facteur 10) par rapport à la durée T2-T1 d'application de l'incrément.

Dans un autre type d'application du procédé selon l'invention, on commande la rotation d'au moins un moteur pas à pas pour le pointage d'au moins une charge utile d'un engin spatial, telle qu'au moins un panneau solaire, une antenne, un instrument, etc, ladite charge utile présentant au moins un élément de structure flexible.

Dans ce cas, l'application du procédé de l'invention est telle que :

- une commande $\alpha$ de l'angle entre le stator et le rotor dudit moteur est échantillonnée à une période d'échantillonnage T, et s'incrémente d'une certaine valeur à chaque période d'échantillonnage,

- une commande nominale $\alpha$ se présente sous la forme : $\alpha_k = \alpha_{k-1} + (d\,\alpha)_k$ où $\alpha_k$ représente la valeur constante de la commande entre les instants k.T et (k+1).T, où k est un nombre entier, et $(d\alpha)_k$ est la valeur de l'incrément à réaliser à la date k.T, les incréments s'effectuant par convention aux instants d'échantillonnage,

- ladite commande est modifiée selon le procédé de l'invention en ajoutant, aux instants k.T de réalisation des incréments, un écart temporel aléatoire ayant des caractéristiques désirées dans le but de minimiser des résonances avec des modes de vibration dudit élément de structure flexible.

Un cas particulier de cette application est tel que les incréments $(d\alpha)_k$ sont tous égaux, comme dans le cas du maintien en rotation à vitesse constante d'un panneau solaire.

De même que précédemment, on peut superposer un signal de commande en boucle fermée au signal de commande en boucle ouverte que l'on veut modifier selon l'invention. Dans ce cas, l'application du procédé de l'invention est telle que les incréments $(d\alpha)_k$ nominalement égaux sont légèrement modifiés, de manière connue, pour réaliser le contrôle d'au moins un phénomène physique résultant de la rotation du moteur, comme par exemple le pilotage d'un satellite à voile solaire dans le cas de la commande d'un panneau solaire muni d'au moins un volet.

Dans le cas de la commande d'un moteur pas à pas, on peut appliquer le procédé de l'invention à d'autres profils de rotation plus complexes que de simples rotations à vitesse constante, comme par exemple des basculements alternatifs à basse fréquence. Dans ce cas, l'application du procédé selon l'invention est telle que le spectre fréquentiel de la commande nominale à appliquer au moteur se situe principalement à des fréquences très inférieures à la fréquence d'échantillonnage, en particulier pour réaliser un mouvement de balayage à faible vitesse.

D'autres caractéristiques et avantages de l'invention apparaîtront au cours de la description suivante de quelques modes de réalisation, donnés à titre d'exemples non limitatifs en regard des dessins joints :

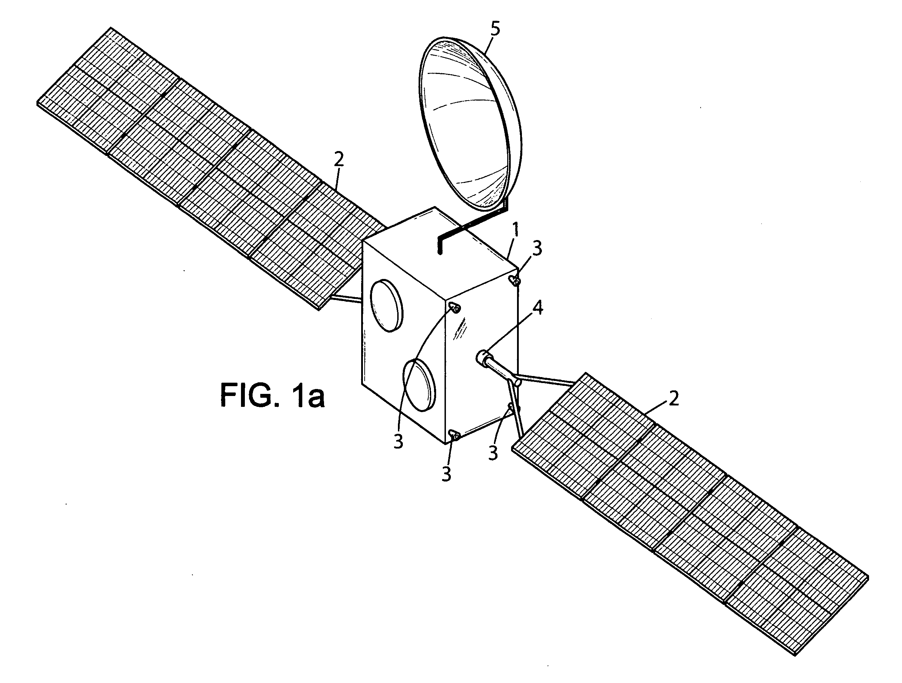

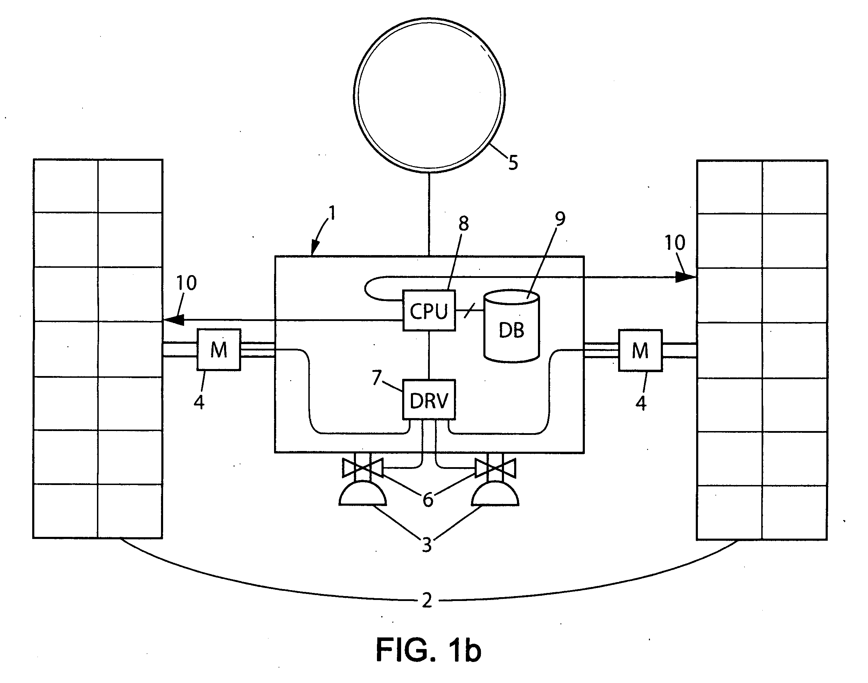

- les figures 1a et 1b représentent respectivement en perspective et de manière schématique un satellite à panneaux solaires déployés tels qu'en orbite, et dans lequel est mis en oeuvre l'invention ;

- les figures 2a, 2b et 2c sont, respectivement, un chronogramme représentant l'évolution temporelle d'un signal de commande conventionnel dans le cas d'un contrôle d'orbite du satellite des figures 1a et 1b, et deux chronogrammes représentant l'évolution temporelle du même signal de commande modifié selon deux formes de réalisation de l'invention ;

- les figures 3a et 3b sont respectivement un chronogramme représentant l'évolution temporelle d'un signal de commande conventionnel dans le cas du pointage d'un générateur solaire par un moteur pas à pas, et un chronogramme représentant l'évolution temporelle du signal de commande modifié selon une forme de réalisation de l'invention ; et

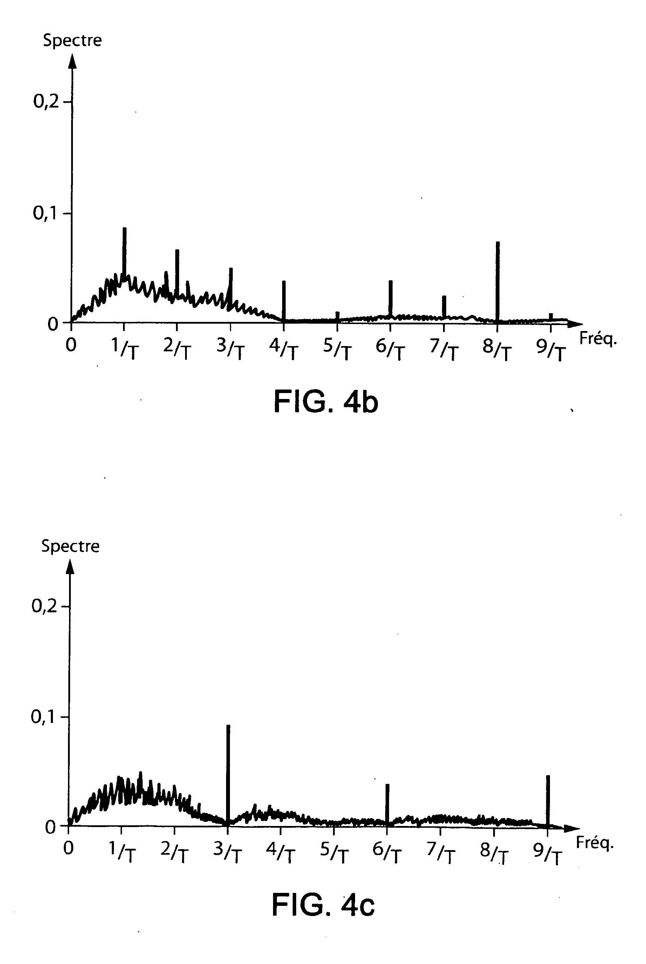

- les figures 4a, 4b et 4c sont des représentations spectrales respectivement du signal de commande conventionnelle correspondant à celui représenté sur la figure 2a, et du même signal de commande modifié selon la forme de réalisation de l'invention correspondant à la figure 2c, avec un écart aléatoire suivant une loi de probabilité discrète à 3 valeurs équiprobables -dTmax, 0 et +dTmax, avec $\mathrm{dTmax} = \dfrac{T}{4}$ pour la figure 4b, et $\mathrm{dTmax} = \dfrac{T}{3}$

pour la figure 4c.

Les figures 1a et 1b représentent de manière schématique un satellite 1 qui comprend une pluralité de générateurs ou panneaux solaires 2, utiles pour l'alimentation électrique, et des charges utiles comme des antennes telles que 5. Ce satellite 1 peut contrôler son attitude et/ou son orbite au moyen de tuyères 3 (voir figures 1a) qui peuvent, dans leur globalité, exercer une poussée dans une ou plusieurs directions. Certains éléments du satellite 1 comme les générateurs solaires 2 ou des charges utiles, telles que les antennes 5, peuvent être de très grandes dimensions, avec des modes de vibration à très basse fréquence qui peuvent être excités par le contrôle d'attitude et d'orbite du satellite 1.

Les tuyères 3 sont actionnées par des vannes d'alimentation 6 (voir figure 1b) qui permettent l'ouverture des tuyères 3 afin d'exercer une poussée dans une direction prédéterminée. Cela permet d'ajuster l'orbite du satellite 1 afin de maintenir une altitude correcte, ou bien d'améliorer les conditions de pointage du satellite, par exemple dans le cadre d'une communication optique avec un autre satellite, ou d'une communication radio avec une station terrestre.

La commande de chaque tuyère 3 est effectuée par ouvertures successives pendant une durée prédéterminée de la vanne d'alimentation 6 correspondante. Ceci a pour effet de générer une poussée constante pendant la durée d'ouverture de la vanne 6. On peut donc moduler l'intensité de la force appliquée par les tuyères 3 uniquement par la durée d'ouverture des vannes 6.

L'orientation des panneaux solaires 2 est contrôlée par des moteurs pas à pas 4. Il s'agit de moteurs électriques dont le signal d'entrée de chacun n'est pas un simple courant ou tension analogique, mais une valeur représentative de l'angle du rotor du moteur 4 par rapport à un point de référence. Le pas minimal de rotation de ces moteurs 4 dépend du type de moteur considéré. Ces moteurs 4 permettent une régulation simple de l'orientation des panneaux solaires 2 en fonction de l'orientation du soleil vis-à-vis du satellite 1.

Les moteurs pas à pas 4 et les vannes d'alimentation 6 des tuyères 3 sont des actionneurs commandés par un dispositif 7 d'application du signal de commande. Ce dispositif (DRV) 7 est contrôlé par une unité de traitement centrale (CPU) 8 électronique, qui calcule et génère le signal de commande qu'applique le dispositif d'application 7 aux différents actionneurs 4 et 6.

L'unité centrale 8 peut, selon un mode de réalisation, générer une séquence d'écarts temporels aléatoires (dTi) 28 ou 35 (voir figures 2b, 2c et 3b) répondant par exemple à une loi de probabilité prédéterminée, afin de générer un signal de commande, tel que 27 sur les figures 2b et 2c, à appliquer par le dispositif 7 d'application de signal de commande. Ce signal de commande est formé par une succession d'incréments 23 ou 33 (figures 2b, 2c et 3b). Dans le cas de la commande de vannes 6 de tuyères 3, ces incréments 23 (voir figure 2b) ont la forme d'une impulsion d'amplitude et de durée sensiblement constantes. Dans le cas de commande des moteurs pas à pas 4 (figures 3a et 3b), chaque commande correspond à un échelon angulaire d'un incrément 33. Le signal de commande, dont le profil temporel de commande nominale (avant application du procédé de l'invention) est représenté en 21 ou 31 en traits pleins sur les figures 2a et 3a (qui représentent les commandes nominales correspondantes), et en pointillés sur les figures 2b, 2c et 3b (qui représentent les commandes modifiées par l'application du procédé de l'invention), comprend une succession d'intervalles d'échantillonnage 22 ou 32, répétés périodiquement, à la période T, et donc avec une fréquence f égale à 1/T, déterminée. A l'intérieur de chacun des intervalles d'échantillonnage 22 ou 32, un incrément 23 ou 33 est généré, et maintenu appliqué, soit pendant un intervalle 24 d'application des incréments 23 qui est de durée $\Delta T$ strictement inférieure à la durée T de l'intervalle d'échantillonnage 22 dans le cas de la commande des vannes 6 des tuyères 3, soit pendant l'intervalle d'échantillonnage 32 de durée T dans le cas de la commande des moteurs pas à pas 4. Cependant, selon un premier exemple de mise en oeuvre de l'invention, l'instant initial 25 ou 34 ou éventuellement final 26 d'application de l'incrément 23 ou 33 est modifié, comme en 29 sur les figures 2b et 2c, de manière aléatoire par l'unité centrale 8. A cet effet, l'unité centrale 8 permet de retarder ou d'avancer d'un écart temporel aléatoire (dTi) 28 ou 35 l'instant initial 25 ou 34 ou éventuellement final 26 d'application de chaque incrément 23 ou 33, par rapport à un instant de référence dans son intervalle d'échantillonnage 22 ou 32 respectif. En général, pour une commande nominale selon la figure 2a, on prend comme instant de référence, le milieu de l'intervalle d'échantillonnage 22.

Selon un autre mode de réalisation, l'unité centrale 8 est connectée à une base de données (DB) 9 formée par des moyens de stockage de données. A l'intérieur de cette base de données 9, il existe des séquences d'écarts temporels dTi pseudo aléatoires. Ces séquences peuvent être considérées comme des suites de variables aléatoires, si le nombre d'éléments dans la séquence est suffisant, et que l'on répète cette séquence en boucle. De telles séquences ou suites de variables pseudo aléatoires peuvent être générées par des programmes informatiques connus.

Par ailleurs, le satellite 1 peut de plus comprendre des capteurs de vibrations 10, disposés au niveau des éléments flexibles comme par exemple les générateurs solaires 2, et capables de mesurer avec précision leurs fréquences de vibrations. Les capteurs 10 sont reliés à l'unité centrale 8 afin de calculer le spectre fréquentiel desdites vibrations de telle sorte que l'unité centrale 8 génère les séquences d'écarts dTi aléatoires ou pseudo aléatoires en fonction du spectre de fréquence et du niveau de vibration détecté par les capteurs 10.

De manière plus détaillée, sur la figure 2a est représenté le profil temporel 21 d'un signal de commande nominale (conventionnelle) utilisé, par exemple, pour le contrôle d'orbite d'un satellite 1. Dans ce cas, le signal 21 représente les ordres d'ouverture et de fermeture de vannes 6 de tuyères 3. Par convention, ce signal vaut 1 pour commander une ouverture, et 0 pour une fermeture. Ce signal comprend des incréments 23 (ordre d'ouverture) à réaliser périodiquement à une période T, dite période d'échantillonnage. Dans chaque intervalle d'échantillonnage 22, l'incrément 23 se réalise sur un intervalle 24 d'application d'incrément de durée $\Delta T$ qui, dans ce cas particulier, a une durée strictement inférieure à la période d'échantillonnage T. L'intervalle 24 d'application de l'incrément est, de préférence, centré sur l'intervalle d'échantillonnage 22, mais la figure 2a présente le cas général où l'instant initial 25 d'application de l'incrément 23 et l'instant final 26 d'application de l'incrément 23 ne sont pas symétriques par rapport au centre de l'intervalle d'échantillonnage 22.

Sur la figure 2b est représenté le profil temporel 27 d'un signal de commande modifié à partir de celui de la figure 2a, en appliquant une première réalisation particulière du procédé selon l'invention, qui consiste à ajouter à l'instant initial 25 d'application de l'incrément 23 un écart temporel (dTi) 28 aléatoire, ou pseudo aléatoire, pouvant être positif ou négatif, et donc correspondre respectivement à un retard ou à une avance dans le temps, de sorte que le nouvel instant initial ou instant initial modifié 29 se produise aléatoirement autour de la valeur de l'ancien instant initial 25.

Une réalisation alternative, mais préférée, du procédé est visualisée sur la figure 2c, où, dans ce cas, le même écart aléatoire (dTi) 28, positif ou négatif, est appliqué sur l'instant initial 25 et sur l'instant final 26 d'application de l'incrément 23, de sorte que le nouvel intervalle d'application de l'incrément s'étendant entre les nouveaux instants initial 29 et final 30 (modifiés) soit juste le translaté de l'ancien intervalle d'application 24 d'un écart temporel aléatoire (dTi) 28. Sur les figures 2b et 2c, dTi est positif lorsque dTi+1 et dTi+2 sont négatifs.

Dans une autre réalisation, applicable en particulier à la commande d'un moteur pas à pas 4 d'entraînement d'un générateur solaire 2, le profil temporel 31 du signal de commande nominale (avant application du procédé de l'invention) représenté sur la figure 3a est constitué d'incréments 33 qui sont successivement appliqués sur l'ensemble d'intervalles d'échantillonnage 32, successifs de durée T, les instants d'application de ces incréments 33 étant conventionnellement les instants d'échantillonnage 34.

La figure 3b montre comment le signal de commande nominal de la figure 3a est modifié selon une réalisation du procédé de l'invention. Un écart temporel aléatoire (dTi) 35 (qui peut être positif ou négatif et correspondre respectivement à un retard ou a une avance dans le temps), et variable aléatoirement d'un intervalle d'échantillonnage 32 au suivant, est appliqué à chaque instant d'application 34 de l'incrément 33, sachant que, dans ce cas, l'instant final d'application d'un incrément correspond à l'instant initial 34 d'application de l'incrément suivant. Sur la figure 3b, dTi-1, dTi+1 et dTi+2 sont positifs, et dTi est négatif, mais la somme des écarts aléatoires peut être nulle, c'est-à-dire que les écarts (dTi) sont à moyenne nulle.

Afin de comprendre l'influence de l'écart aléatoire dTi sur le spectre du signal de commande, il convient de comparer le spectre du signal de commande conventionnel et celui du signal de commande modifié après application du procédé selon l'invention. En reprenant le cas du signal de commande conventionnel de la figure 2a, noté $f(t)$, l'énergie de ce signal périodique est concentrée aux fréquences multiples de la fréquence d'échantillonnage 1/T, comme le montre son spectre fréquentiel représenté sur la figure 4a. A la fréquence k/T, où k est un nombre entier naturel, le spectre du signal est précisément donné par le coefficient de Fourier $F_k$ de rang k du signal où, par définition :

$$F_k = \frac{1}{T} \int_{nT}^{(n+1)T} f(t)\, e^{-i\omega t}\, dt \quad \text{avec} \quad \omega = 2\pi k / T$$

Dans le cas considéré :

$$F_k = \frac{\Delta T}{T} \frac{\sin(\omega \Delta T / 2)}{\omega \Delta T / 2}\, e^{-i\omega T / 2} \quad \text{où} \quad \omega = 2\pi k / T$$

et on retrouve les valeurs numériques de la figure 4a, où est représentée la norme des coefficients $F_k$ dans le cas où T = 1 seconde et $\Delta T$ = 0.2 seconde (et dTi=0 puisqu'il s'agit du signal de commande nominale).

Afin de généraliser au cas du signal modifié par le procédé suivant l'invention, on note que le coefficient de Fourier de rang k peut s'écrire également, du fait de la périodicité de la fonction $f(t)$ :

$$F_k = \frac{1}{(2N+1)T} \int_{-nT}^{(n+1)T} f(t)\, e^{-i\omega t}\, dt$$

Un calcul montre qu'on peut passer à la limite:

$$F_k = \lim_{N \to \infty} \frac{1}{(2N+1)T} \int_{nT}^{(n+1)T} f(t) e^{-i\omega t} dt$$

Cette formule peut s'appliquer à toute réalisation particulière du signal modifié, selon le procédé, par l'ajout d'un écart aléatoire (nous noterons $\bar{f}(t)$ un tel signal modifié). On fait, tout d'abord l'hypothèse qu'à chaque intervalle d'échantillonnage 22, le même écart aléatoire $dT(n)$ est appliqué à l'instant initial 25 et à l'instant final 26 d'application de l'incrément. Dans ce cas, qui est celui de la figure 2c, la transformée de Fourier du signal modifié à la fréquence k/T, noté $\bar{F}_k$, est donnée par la formule :

$$\bar{F}_k = \lim_{N \to \infty} \frac{1}{(2N+1)T} \int_{nT}^{(n+1)T} \overline{f(t)} e^{-i\omega t} dt$$

$$= \lim_{N \to \infty} \frac{1}{(2N+1)T} \frac{\Delta T}{T} \frac{\sin(\omega \Delta T / 2)}{\omega \Delta T / 2} e^{-i\omega T/2} \sum_{n=-N}^{n=N} e^{-i\omega(nT + dT(n))}$$

où $\omega = 2\pi k/T$. La valeur moyenne de ce coefficient pour différentes réalisations de l'écart aléatoire dT(n) 28 est donnée par :

$$E[\bar{F}_k] = \lim_{N \to \infty} \frac{1}{(2N+1)T} \frac{\Delta T}{T} \frac{\sin(\omega \Delta T / 2)}{\omega \Delta T / 2} e^{-i\omega T/2} \sum_{n=-N}^{n=N} e^{-i\omega nT} E[e^{-i\omega dT(n)}]$$

où on reconnaît le coefficient de Fourier du signal d'origine modifié par un terme venant de l'écart aléatoire introduit suivant l'invention :

$$E[\bar{F}_k] = F_k \, E[e^{-i\omega dT(n)}]$$

Si, par exemple, on prend comme loi de probabilité de l'écart aléatoire dT, une loi discrète à M valeurs $dT_m$ de même probabilité, dans ce cas, l'harmonique de rang k du signal d'origine sera multiplié par la valeur :

$$\frac{1}{M} \sum_{m=1}^{M} \left( e^{-2i\pi \frac{dT_m}{T}} \right)^k$$

Sachant que

$$\sum_{m=1}^{M} \left( e^{-2i\pi m/M} \right)^k = 0 \quad \text{pour} \quad k = 1, \ldots, M-1$$

on en déduit qu'une distribution équi-répartie des valeurs $dT_m$ entre deux valeurs -dTmax et dTmax, à savoir :

$$dT_m = -dT_{max} + 2\left( \frac{m-1}{M-1} \right) dT_{max} \quad \text{pour} \quad m = 1, \ldots, M-1$$

permet d'éliminer les M-1 premières harmoniques du signal d'origine.

Par exemple, pour M=3, considérons un écart aléatoire prenant les valeurs -dTmax, 0, et dTmax avec chacune une probabilité de 1/3. Dans le cas où dTmax/T = 1/3, les deux premières harmoniques du signal d'origine, aux fréquences 1/T et 2/T, sont éliminées, comme le montre la figure 4c qui représente le spectre du signal dans ce cas.

Il est à noter qu'un écart aléatoire moins important, correspondant à dTmax/T = 1/4 , sans éliminer strictement les premières harmoniques, les aurait tout de même atténuées fortement, comme le montre la figure 4b qui représente le spectre du signal dans ce cas.

De façon générale, on calcule, selon le procédé une loi de probabilité afin de générer des écarts temporels (dTi) aléatoires vis-à-vis de l'instant de référence du signal d'application dans le but de modifier le spectre fréquentiel du signal de commande. On peut, par exemple, utiliser une loi de probabilité uniforme, c'est-à-dire que l'écart temporel est distribué sur un intervalle compris entre deux valeurs extrémales, par exemple [-dTmax, dTmax]. Chacune des valeurs de cet intervalle a une probabilité égale d'être appliquée. Dans un tel cas, on peut montrer que le coefficient d'atténuation du spectre du signal de commande initial, est donné aux fréquences multiples de la fréquence d'échantillonnage par l'expression :

$$\frac{\sin(\omega dT_{\max})}{\omega dT_{\max}} \quad \text{où} \quad \omega = 2\pi k / T$$

En jouant sur la valeur de dTmax, on peut plus ou moins atténuer le spectre du signal de commande. Plus on augmente la valeur de dTmax, plus on distribue la probabilité de l'instant d'application de l'incrément, et plus l'atténuation des pics d'énergie du signal d'origine aux fréquences multiples de la fréquence d'échantillonnage augmente.

Un autre exemple de loi de probabilité utilisable est l'exemple de la loi de probabilité binomiale dans laquelle la valeur -dTmax a une probabilité d'être appliquée égale à P, tandis que la valeur d'écart temporel +dTmax a une probabilité d'être appliquée égale à 1-P. Dans un tel cas, on utilise en général P=1/2, c'est-à-dire que le retard négatif -dTmax et le retard positif + dTmax ont une probabilité égale d'être appliqués. Dans ce cas, le coefficient d'atténuation est donné par :

$$\cos(\omega dT_{\max}) \quad \text{où} \quad \omega = 2\pi k / T$$

En particulier, dans le cas où dTmax vaut T/4, les harmoniques impaires du signal d'origine disparaissent totalement.

D'autres lois de probabilité peuvent être utilisées afin d'établir la commande. Par ailleurs, on rappelle qu'il est possible d'utiliser des séquences de nombres pseudo aléatoires générées au préalable. Cette génération peut être effectuée avant le lancement d'un satellite 1 et inscrite dans la mémoire 9, ou en cours de fonctionnement grâce à un générateur de nombres aléatoires qui génère une séquence dont les propriétés spectrales permettent d'atténuer des harmoniques proches d'une ou de plusieurs fréquences de résonance.

Par ailleurs, il convient de noter que, dans le cas de la commande de tuyères 3, il est possible de modifier la durée des impulsions de telle sorte qu'on puisse assurer, en plus de la consigne de déplacement souhaitée, un contrôle de pointage ou de positionnement du satellite 1 simultanément. De même, dans le cas de l'orientation des panneaux solaires 2, il est possible de modifier l'incrément au cours du temps de telle sorte qu'on puisse, par exemple, piloter un satellite à voile solaire.

## Revendications

**1.** Procédé de commande d'au moins un système mécanique (1) présentant au moins un élément de structure flexible (2, 5) et au moins un actionneur ou groupe d'actionneurs (3, 4), ledit procédé étant destiné à réduire le niveau de vibrations dudit élément de structure flexible (2, 5) tout en commandant ledit actionneur ou groupe d'actionneurs (3, 4) de sorte à atteindre au moins un objectif assigné audit système mécanique (1), tel que réaliser un déplacement, ladite commande étant constituée d'incréments (23, 33) devant être réalisés à une période T dite période d'échantillonnage, chacun desdits incréments (23, 33) étant constant en amplitude dans un intervalle de temps dit intervalle d'échantillonnage (22, 32) s'étendant entre deux instants d'échantillonnage successifs et chacun desdits incréments (23, 33) s'appliquant pendant un intervalle d'application d'incrément (24) d'une durée ($\Delta T$) inférieure ou égale à ladite période d'échantillonnage T, ledit procédé étant **caractérisé en ce que**, dans chaque intervalle d'échantillonnage (22, 32), l'un au moins des instants initial (25, 34) et final (26) d'application dudit incrément (23, 33) est modifié par l'ajout d'un écart temporel (dT) variable, aléatoire ou pseudo-aléatoire, dit écart aléatoire (28, 35).

2. Procédé selon la revendication 1, **caractérisé en ce que** la durée d'application desdits incréments (33) est égale à la période d'échantillonnage T, et un écart aléatoire (35) est ajouté à l'instant initial (34) d'application desdits incréments (33).

3. Procédé selon la revendication 1, **caractérisé en ce que** la durée d'application ($\Delta$T) desdits incréments (23) est strictement inférieure à la période d'échantillonnage T, et un écart aléatoire (28) est ajouté soit à l'instant initial (25), soit à l'instant final (26), soit aux deux instants initial (25) et final (26) d'application desdits incréments (23), avec des valeurs pouvant être différentes dans ce dernier cas.

4. Procédé selon la revendication 3, **caractérisé en ce que** dans chaque intervalle d'échantillonnage (22), le même écart aléatoire (28) est ajouté à la fois à l'instant initial (25) et à l'instant final (26) d'application desdits incréments (23).

5. Procédé selon l'une quelconque des revendications 1 à 4, **caractérisé en ce qu'**une loi de probabilité choisie pour déterminer ledit écart aléatoire (28, 35) est définie de sorte à modifier au moins un des pics d'énergie de la commande.

6. Procédé selon l'une quelconque des revendications 1 à 5, **caractérisé en ce que** la valeur absolue maximum de l'écart aléatoire (28, 35) est inférieure à une valeur fixée, de préférence une fraction entière de la période d'échantillonnage T.

7. Procédé selon l'une quelconque des revendications 1 à 6, **caractérisé en ce que** l'écart aléatoire (28, 35) est à moyenne nulle.

8. Procédé selon l'une quelconque des revendications 1 à 7, **caractérisé en ce que** les valeurs de l'écart aléatoire (28, 35) sont sélectionnées parmi les multiples entiers d'une valeur pré-définie T'

9. Procédé selon la revendication 8, **caractérisé en ce que** ladite valeur pré-définie T' est un diviseur entier de la période d'échantillonnage T

10. Procédé selon l'une quelconque des revendications 8 et 9, **caractérisé en ce que** la fréquence 1/T' est choisie de sorte à limiter les éventuelles résonances avec les modes de vibrations dudit élément de structure flexible (25), et de préférence ne coïncide pas avec les fréquences propres desdits modes de vibrations.

11. Procédé selon l'une quelconque des revendications 1 à 10, **caractérisé en ce qu'**une loi de probabilité choisie pour déterminer ledit écart aléatoire (28, 35) est entièrement définie par un nombre fini de paramètres calculés de sorte à modifier au moins un des pics d'énergie de la commande.

12. Procédé selon l'une quelconque des revendications 1 à 11, **caractérisé en ce qu'**une loi de probabilité choisie pour déterminer ledit écart aléatoire (28, 35) est une loi de probabilité discrète à M valeurs, lesdites M valeurs et leurs probabilités étant calculées de sorte à modifier au moins un des pics d'énergie de la commande.

13. Procédé selon la revendication 12, **caractérisé en ce que** ladite loi de probabilité est une loi binomiale prenant des valeurs extrêmes d'écart aléatoire (28, 35) +dTmax avec une probabilité de 1/2, et -dTmax avec une probabilité de 1/2.

14. Procédé selon la revendication 12, **caractérisé en ce que** ladite loi de probabilité est une loi discrète à M valeurs équiprobables en progression arithmétique entre une valeur minimale -dTmax et une valeur maximale +dTmax des écarts aléatoires (28, 35), avec dTmax = T.(M-1)/2M.

15. Procédé selon l'une quelconque des revendications 1 à 11, **caractérisé en ce qu'**une loi de probabilité choisie pour déterminer l'écart aléatoire (28, 35) est une loi uniforme entre des valeurs extrêmes d'écart aléatoire dTmin et dTmax, les valeurs dTmin et dTmax étant choisies pour modifier au moins un pic d'énergie de la commande.

16. Procédé selon la revendication 15, **caractérisé en ce que** ladite loi de probabilité est une loi uniforme entre des valeurs maximales -dTmax et dTmax.

17. Procédé selon la revendication 16 telle que rattachée à la revendication 4, **caractérisé en ce que** dTmax = T/2, de sorte que le spectre de la commande ne comporte pas de raie à la fréquence d'échantillonnage 1/T.

**18.** Procédé selon la revendication 16 telle que rattachée à la revendication 4, **caractérisé en ce que** dTmax = T/4, de sorte que le spectre de la commande ne comporte pas de raie aux fréquences multiples impaires de la fréquence d'échantillonnage 1/T.

**19.** Procédé selon l'une quelconque des revendications 1 à 18, **caractérisé en ce que** les écarts aléatoires (28, 35) prennent les valeurs de nombres successifs d'au moins une séquence aléatoire ou pseudo-aléatoire de nombres produite à chaque période d'échantillonnage par au moins un programme informatique générateur de nombres aléatoires ou pseudo-aléatoires

**20.** Procédé selon l'une quelconque des revendications 1 à 18, **caractérisé en ce que** les écarts aléatoires (28, 35) prennent les valeurs de nombres successifs d'une séquence longue mais finie de nombres présentant des caractéristiques aléatoires proches de caractéristiques désirées, ladite séquence étant pré-calculée et appliquée suivant le procédé, puis reproduite en boucle une fois qu'elle est achevée.

**21.** Produit programme d'ordinateur comprenant des instructions de code réalisant la mise en oeuvre du procédé selon l'une quelconque des revendications 1 à 20, lorsqu'il est chargé et exécuté sur des moyens informatiques.

**22.** Dispositif de mise en oeuvre du procédé selon l'une quelconque des revendications 1 à 20, comprenant:

a) un système mécanique (1) présentant au moins un élément de structure flexible (2, 5) et au moins un actionneur ou groupe d'actionneurs (3, 4) ; ledit dispositif étant destiné à réduire le niveau de vibrations dudit élément de structure flexible (2, 5) tout en commandant ledit actionneur ou groupe d'actionneurs (3, 4) de sorte à atteindre au moins un objectif assigné audit système mécanique (1), tel que réaliser un déplacement, ladite commande étant constituée d'incréments (23, 33) devant être réalisés à une période T dite période d'échantillonnage ;
b) des moyens de calcul et informatiques et aptes à produire lesdits incréments (23, 33) de ladite commande d'au moins un desdits actionneur et groupe d'actionneurs (3, 4) dudit système mécanique (1) ; chacun desdits incréments (23, 33) étant constant en amplitude dans un intervalle de temps, dit intervalle d'échantillonnage (22, 32), s'étendant entre deux instants d'échantillonnage successifs et chacun desdits incréments (23, 33) s'appliquant pendant un intervalle d'application d'incrément (24) d'une durée (ΔT) inférieure ou égale à ladite période d'échantillonnage T ;
lesdits moyens de calcul et informatiques étant propres à produire ainsi la commande numérique à appliquer effectivement audit système mécanique (1);
c) des moyens électriques et/ou électroniques permettant de transformer des ordres de commande numériques élaborés par les moyens de calcul et informatiques en signaux électriques envoyées à au moins un desdits actionneur (3, 4) et groupe d'actionneurs (3, 4) pour réaliser physiquement la commande assignée; **caractérisé en ce que** lesdits moyens de calcul et informatiques sont propres à :

- produire, à chaque période d'échantillonnage T, ledit écart aléatoire (28, 35) suivant une loi de probabilité se rapprochant au mieux d'une loi de probabilité désirée ;
- modifier l'un au moins des instants (25, 26, 34) initial et final d'application dudit incrément (23, 33) en lui ajoutant, dans chaque intervalle d'échantillonnage (22, 32), un écart temporel (dT) variable, aléatoire ou pseudo-aléatoire, c'est-à-dire ledit écart aléatoire (28, 35).

**23.** Dispositif selon la revendication 22 pour la mise en oeuvre du procédé selon la revendication 20, **caractérisé en ce qu'**une séquence longue mais finie d'écarts aléatoires (28, 35) ayant les caractéristiques aléatoires désirées est calculée préalablement, puis stockée dans une mémoire (9) desdits moyens de calcul et informatiques (8), lesdits écarts aléatoires (28, 35) étant, successivement et suivant un ordre établi, ajoutés à au moins un instant d'application (25, 26, 34) desdits incréments (23, 33) de ladite commande, ladite séquence étant reproduite en boucle une fois qu'elle est achevée.

**24.** Dispositif selon la revendication 22, **caractérisé en ce qu'**au moins une partie des paramètres intervenant dans le calcul des écarts aléatoires (28, 35) par ledit programme informatique, tels que les paramètres d'une loi de probabilité, ou une séquence de valeurs aléatoires, peut être modifiée au cours du fonctionnement dudit système mécanique (1), afin notamment d'optimiser l'efficacité du procédé.

**25.** Dispositif selon la revendication 24, **caractérisé en ce qu'**il comprend au moins un capteur (10) dédié de mesure des vibrations d'au moins un élément de structure flexible (2, 5) présent dans le système mécanique (1), des moyens de calcul du spectre fréquentiel de ces vibrations, et des moyens de modification de paramètres intervenant dans le calcul desdits écarts aléatoires (28, 35) afin de réduire le niveau desdites vibrations en modifiant au moins un des pics d'énergie du spectre fréquentiel de la commande.

**26.** Application du procédé selon l'une quelconque des revendications 1 à 20, **caractérisée en ce qu'**elle consiste à commander l'ouverture d'au moins une tuyère (3) d'un système de contrôle d'orbite, de stabilisation et/ou d'orientation d'un engin (1) se déplaçant dans l'espace, tels que lanceur, satellite artificiel, sonde interplanétaire, ledit engin (1) comportant au moins un élément de structure flexible, tel de grands appendices, antenne (5), panneau solaire (2), et structure primaire.

**27.** Application selon la revendication 26, **caractérisée en ce qu'**elle consiste à

- commander l'ouverture d'au moins une tuyère (3) afin d'imprimer audit engin (1) un incrément de vitesse permettant de corriger la trajectoire dudit engin (1) ;
- réaliser nominalement ledit incrément de vitesse en une suite de petits incréments effectués périodiquement à une période T ;
- réaliser lesdits petits incréments par la commande (7) d'ouverture d'au moins une tuyère (3), ladite commande étant conventionnellement égale à 0 pour un ordre de fermeture de tuyère (3), et à 1 pour un ordre d'ouverture de tuyère (3) ;
- avant la mise en oeuvre dudit procédé, calculer une commande nominale de façon à être périodique de période T dans l'intervalle de temps [Ti, Ti + N.T], où N est un nombre entier, de réalisation d'une impulsion totale, et, dans ledit intervalle de temps, égale à un incrément de 1 sur tous les intervalles de temps [Ti + k.T + T1, Ti + k.T + T2] où k est un nombre entier inférieur à N, T1 et T2 étant des constantes telles que $0<T1<T2<T$, $T2-T1$ étant la largeur ($\Delta T$) du créneau de commande (24) réalisant lesdites petites impulsions, et égale à 0 le reste du temps ;
- modifier ladite commande nominale selon ledit procédé selon l'une quelconque desdites revendications 1 à 20, en ajoutant à au moins l'un des instants d'application initial (25) Ti + k.T + T1 et final (26) Ti + k.T + T2 de l'incrément, un écart temporel aléatoire (28, 35) ayant des caractéristiques désirées dans le but de minimiser les résonances de ladite commande avec les modes de vibration dudit élément de structure flexible (2, 5) ; et
- dans le cas où un écart aléatoire (28) est appliqué aux deux instants initial (25) et final (26) d'application de l'incrément, ledit écart aléatoire (28) pouvant être le même pour lesdits deux instants, auquel cas le créneau de commande (24) est simplement translaté aléatoirement dans le temps, ou bien pouvant être différent pour l'un de ce qu'il est pour l'autre desdits deux instants (25, 26).

**28.** Application selon la revendication 27, **caractérisée en ce qu'**en plus desdits écarts aléatoires (28, 35), on ajoute à un seul des instants initial (25) et final (26) d'application de l'incrément un autre écart temporel, calculé de manière connue pour réaliser un contrôle d'attitude ou de pointage de l'engin spatial (1) en même temps que l'on réalise la commande d'incrément de vitesse pour le contrôle d'orbite.

**29.** Application du procédé selon l'une quelconque des revendications 1 à 20, **caractérisée en ce qu'**elle consiste à commander la rotation d'au moins un moteur pas à pas (4) pour le pointage d'au moins une charge utile d'un engin spatial (1), telle qu'au moins un panneau solaire (2), une antenne (5), un instrument, ladite charge utile présentant au moins un élément de structure flexible (2).

**30.** Application selon la revendication 29, **caractérisée en ce que**

- une commande $\alpha$ de l'angle entre le stator et le rotor dudit moteur (4) est échantillonnée à une période d'échantillonnage T, et s'incrémente d'une certaine valeur à chaque période d'échantillonnage,
- une commande nominale $\alpha$ se présente sous la forme : $\alpha_k = \alpha_{k-1} + (d\alpha)_k$ où $\alpha_k$ représente la valeur constante de la commande entre les instants k.T et (k+1).T, où k est un nombre entier, et $(d\alpha)_k$ est la valeur de l'incrément à réaliser à la date k.T, les incréments s'effectuant par convention aux instants d'échantillonnage (34),
- ladite commande est modifiée selon le procédé de l'une quelconque des revendications 1 à 20 en ajoutant, aux instants k.T de réalisation (34) des incréments, un écart temporel aléatoire (35) ayant des caractéristiques désirées dans le but de minimiser des résonances avec des modes de vibration dudit élément de structure flexible (2).

**31.** Application selon la revendication 30, **caractérisée en ce que** les incréments $(d\alpha)_k$ sont tous égaux, comme dans le cas du maintien en rotation à vitesse constante d'un panneau solaire (2).

**32.** Application selon la revendication 30, **caractérisée en ce que** les incréments (d $\alpha$)$_k$ nominalement égaux sont légèrement modifiés, de manière connue, pour réaliser le contrôle d'au moins un phénomène physique résultant de la rotation du moteur (4), comme le pilotage d'un satellite (1) à voile solaire dans le cas de la commande d'un panneau solaire (2) muni d'au moins un volet.

**33.** Application selon l'une quelconque des revendications 31 et 32, **caractérisée en ce que** le spectre fréquentiel de la commande nominale à appliquer au moteur (4) se situe principalement à des fréquences très inférieures à la fréquence d'échantillonnage, en particulier pour réaliser un mouvement de balayage à faible vitesse.

**Claims**

**1.** Method of controlling at least one mechanical system (1) exhibiting at least one flexible structure element (2, 5) and at least one actuator or group of actuators (3, 4), said method being intended to reduce the level of vibrations of said flexible structure element (2, 5) while controlling said actuator or group of actuators (3, 4) in such a way as to achieve at least one objective assigned to said mechanical system (1), such as carrying out a displacement, said control consisting of increments (23, 33) having to be carried out at a period T termed the sampling period, each of said increments (23, 33) being constant in amplitude in a time interval termed the sampling interval (22, 32) extending between two successive sampling instants and each of said increments (23, 33) being applied during an increment application interval (24) of a duration ($\Delta$T) which is less than or equal to said sampling period T, said method being **characterized in that**, in each sampling interval (22, 32), at least one of the initial (25, 34) and final (26) instants of application of said increment (23, 33) is modified by adding a variable, random or pseudo-random, temporal deviation (dT), termed the random deviation (28, 35).

**2.** Method according to Claim 1, **characterized in that** the duration of application of said increments (33) is equal to the sampling period T, and a random deviation (35) is added to the initial instant (34) of application of said increments (33).

**3.** Method according to Claim 1, **characterized in that** the duration of application ($\Delta$T) of said increments (23) is strictly less than the sampling period T and a random deviation (28) is added either at the initial instant (25), or at the final instant (26), or at both the initial (25) and final (26) instants of application of said increments (23), with values that may be different in the latter case.

**4.** Method according to Claim 3, **characterized in that** in each sampling interval (22), the same random deviation (28) is added both at the initial instant (25) and at the final instant (26) of application of said increments (23).

**5.** Method according to any one of Claims 1 to 4, **characterized in that** a probability law chosen to determine said random deviation (28, 35) is defined in such a way as to modify at least one of the energy peaks of the control.

**6.** Method according to any one of Claims 1 to 5, **characterized in that** the maximum absolute value of the random deviation (28, 35) is less than a fixed value, preferably an integer fraction of the sampling period T.

**7.** Method according to any one of Claims 1 to 6, **characterized in that** the random deviation (28, 35) has zero mean.

**8.** Method according to any one of Claims 1 to 7, **characterized in that** the values of the random deviation (28, 35) are selected from the integer multiples of a predefined value T'.

**9.** Method according to Claim 8, **characterized in that** said predefined value T' is an integer divider of the sampling period T.

**10.** Method according to any one of Claims 8 and 9, **characterized in that** the frequency 1/T' is chosen in such a way as to limit any resonances with the modes of vibration of said flexible structure element (25), and preferably do not coincide with the natural frequencies of said vibration modes.

**11.** Method according to any one of Claims 1 to 10, **characterized in that** a probability law chosen to determine said random deviation (28, 35) is fully defined by a finite number of parameters calculated in such a way as to modify at least one of the energy peaks of the control.

**12.** Method according to any one of Claims 1 to 11, **characterized in that** a probability law chosen to determine said random deviation (28, 35) is a discrete probability law with M values, said M values and their probabilities being calculated in such a way as to modify at least one of the energy peaks of the control.

**13.** Method according to Claim 12, **characterized in that** the said probability law is a binomial law taking extreme values of random deviation (28, 35) +dTmax with a probability of 1/2, and -dTmax with a probability of 1/2.

**14.** Method according to Claim 12, **characterized in that** said probability law is a discrete law with M equiprobable values in arithmetic progression between a minimum value -dTmax and a maximum value +dTmax of the random deviations (28, 35), with dTmax = T.(M-1)/2M.

**15.** Method according to any one of Claims 1 to 11, **characterized in that** a probability law chosen to determine the random deviation (28, 35) is a law which is uniform between extreme values of random deviation dTmin and dTmax, the values dTmin and dTmax being chosen to modify at least one energy peak of the control.

**16.** Method according to Claim 15, **characterized in that** said probability law is a law which is uniform between maximum values -dTmax and dTmax.

**17.** Method according to Claim 16 such as tied to Claim 4, **characterized in that** dTmax = T/2, so that the spectrum of the control does not include any energy peak at the sampling frequency 1/T.

**18.** Method according to Claim 16 such as tied to Claim 4, **characterized in that** dTmax = T/4, so that the spectrum of the control does not include any energy peak at the odd multiple frequencies of the sampling frequency 1/T.

**19.** Method according to any one of Claims 1 to 18, **characterized in that** the random deviations (28, 35) take the values of successive numbers of at least one random or pseudo-random sequence of numbers that is produced at each sampling period by at least one computer program generating random or pseudo-random numbers.

**20.** Method according to any one of Claims 1 to 18, **characterized in that** the random deviations (28, 35) take the values of successive numbers of a long but finite sequence of numbers exhibiting random characteristics close to desired characteristics, said sequence being precalculated and applied according to the method, then reproduced in a loop once it is completed.

**21.** Computer program product comprising code instructions carrying out the implementation of the method according to any one of Claims 1 to 20, when it is loaded and executed on computing means.

**22.** Device for implementing the method according to any one of Claims 1 to 20, comprising :

a) one mechanical system (1) exhibiting at least one flexible structure element (2, 5) and at least one actuator or group of actuators (3, 4), said device being intended to reduce the level of vibrations of said flexible structure element (2, 5) while controlling said actuator or group of actuators (3, 4) in such a way as to achieve at least one objective assigned to said mechanical system (1), such as carrying out a displacement, said control consisting of increments (23, 33) having to be carried out at a period T termed the sampling period,
b) calculation and computing means able to produce said increments (23, 33) of said control of at least one of said actuator and group of actuators (3, 4) of said mechanical system; each of said increments (23, 33) being constant in amplitude in a time interval termed the sampling interval (22, 32) extending between two successive sampling instants and each of said increments (23, 33) being applied during an increment application interval (24) of a duration ($\Delta$T) which is less than or equal to said sampling period T,
sais calculation and computing means being able to thus produce the digital control to actually apply to said mechanical system (1);
c) electrical and/or electronic means allowing the transformation of digital control orders produced by the calculation and computing means into electrical signals sent to at least one of said actuator and group of actuators (3, 4) to physically carry out the assigned control;
**characterized in that** said calculation and computing means are able to

- produce, at each sampling period T, said random deviation (28, 35) according to a probability law that best approximates a desired probability law;
- modify at least one of the initial and final instants (25, 26, 34) of application of said increment (23, 33) by adding thereto, in each sampling interval (22, 32) a variable random or pseudo-random temporal deviation (ΔT), i.e. said random deviation (28, 35).

23. Device according to Claim 22 for the implementation of the method according to Claim 20, **characterized in that** a long but finite sequence of random deviations (28, 35) having the desired random characteristics is calculated beforehand, then stored in a memory (9) of said calculation and computing means (8), said random deviations (28, 35) being, successively and in an established order, added to at least one instant of application (25, 26, 34) of said increments (23, 33) of said control, said sequence being reproduced in a loop once it has been completed.

24. Device according to Claim 22, **characterized in that** at least part of the parameters involved in the calculation of the random deviations (28, 35) by said computer program, such as the parameters of a probability law, or a sequence of random values, may be modified in the course of the operation of said mechanical system (1), so as in particular to optimize the effectiveness of the method.

25. Device according to Claim 24, **characterized in that** it comprises at least one dedicated sensor (10) for measuring the vibrations of at least one flexible structure element (2, 5) present in the mechanical system (1), means for calculating the frequency spectrum of these vibrations, and means for modifying parameters involved in the calculation of said random deviations (28, 35) so as to reduce the level of said vibrations by modifying at least one of the energy peaks of the frequency spectrum of the control.

26. Application of the method according to any one of Claims 1 to 20, **characterized in that** it consists in controlling the opening of at least one thruster (3) of a system for control of orbit, stabilization and/or orientation of a craft (1) moving through space, such as a launcher, artificial satellite, interplanetary probe, said craft (1) comprising at least one flexible structure element, such as large appendages, antenna (5), solar panel (2), and primary structure.

27. Application according to Claim 26, **characterized in that** it consists in

- controlling the opening of at least one thruster (3) so as to impart a speed increment to said craft (1) making it possible to correct the trajectory of said craft (1);
- nominally carrying out said speed increment as a series of small increments performed periodically with a period T;
- carrying out said small increments through the control (7) of opening of at least one thruster (3), said control being conventionally equal to zero for a thruster closure order (3), and to one for a thruster opening order (3);
- before the implementation of said method, calculating a nominal control so as to be periodic of period T in the time interval $[T_i, T_i + N.T]$, where N is an integer, for realizing a total impulse, and, in said time interval, equal to an increment of one over all the time intervals $[T_i + k.T + T_1, T_i + k.T + T_2]$ where k is an integer less than N, $T_1$ and $T_2$ being constants such that $0 < T_1 < T_2 < T$, $T_2 - T_1$ being the width (ΔT) of the control notch (24) carrying out said small impulses, and equal to 0 the remainder of the time;
- modifying said nominal control according to said method according to any one of said Claims 1 to 20, by adding to at least one of the initial (25) $T_i + k.T + T_1$ and final (26) $T_i + k.T + T_2$ instants of application of the increment, a random temporal deviation (28, 35) having desired characteristics with the aim of minimizing the resonances of said control with the modes of vibration of said flexible structure element (2, 5); and
- in the case where a random deviation (28) is applied at both the initial (25) and final (26) instants of application of the increment, said random deviation (28) being able to be the same for both said instants, in which case the control notch (24) is simply translated randomly in time, or indeed being able to be different for one from what it is for the other of both said instants (25, 26).

28. Application according to Claim 27, **characterized in that** on top of said random deviations (28, 35) is added to one only of the initial (25) and final (26) instants of application of the increment another temporal deviation, calculated in a known manner to carry out an attitude or pointing control of the space craft (1) at the same time as the speed increment control is carried out for the orbit control.

29. Application of the method according to any one of Claims 1 to 20, **characterized in that** it consists in controlling the rotation of at least one stepper motor (4) for the pointing of at least one payload of a space craft (1), such as at least one solar panel (2), an antenna (5), an instrument, said payload exhibiting at least one flexible structure element (2).

30. Application according to Claim 29, **characterized in that**

- a control $\alpha$ of the angle between the stator and the rotor of said motor (4) is sampled at a sampling period T, and is incremented by a certain value at each sampling period,
- a nominal control $\alpha$ takes the form: $\alpha_k = \alpha_{k-1} + (d\alpha)_k$ where $\alpha_k$ represents the constant value of the control between the instants k.T and (k+1).T, where k is an integer, and $(d\alpha)_k$ is the value of the increment to be carried out at the date k.T, the increments being performed by convention at the sampling instants (34),
- said control is modified according to the method of any one of Claims 1 to 20 by adding, to the instants k.T at which the increments are carried out (34), a random time deviation (35) having desired characteristics with the aim of minimizing resonances with modes of vibration of said flexible structure element (2).

**31.** Application according to Claim 30, **characterized in that** the increments $(d\alpha)_k$ are all equal, as in the case of keeping a solar panel (2) rotating at constant speed.

**32.** Application according to Claim 30, **characterized in that** the nominally equal increments $(d\alpha)_k$ are slightly modified, in a known manner, so as to carry out the control of at least one physical phenomenon resulting from the rotation of the motor (4), such as the steering of a satellite (1) having a solar sail in the case of the control of a solar panel (2) furnished with at least one flap.

**33.** Application according to any one of Claims 31 and 32, **characterized in that** the frequency spectrum of the nominal control to be applied to the motor (4) is situated principally at frequencies well below the sampling frequency, in particular to carry out a low-speed scanning movement.

## Patentansprüche

**1.** Verfahren zur Steuerung/Regelung von wenigstens einem mechanischen System (1), welches wenigstens ein flexibles Strukturelement (2, 5) und wenigstens einen Aktuator oder eine Gruppe von Aktuatoren (3, 4) aufweist, wobei das Verfahren dazu bestimmt ist, das Schwingungsniveau des flexiblen Strukturelements (2, 5) zu reduzieren, wobei der Aktuator oder die Gruppe von Aktuatoren (3, 4) derart gesteuert/geregelt wird, dass wenigstens ein dem mechanischen System (1) zugeordnetes Ziel erreicht wird, beispielsweise eine Verlagerung auszuführen, wobei die Steuerung/Regelung aus Inkrementen (23, 33) zusammengesetzt ist, die mit einer als Abtast-Periode bezeichneten Periode T ausgeführt werden müssen, wobei jedes der Inkremente (23, 33) in einem als Abtast-Intervall (22, 32) bezeichneten Zeit-Intervall in der Amplitude konstant ist, welches sich zwischen zwei aufeinander folgenden Abtast-Zeitpunkten erstreckt, und jedes der Inkremente (23, 33) während einem Inkrement-Anwendungs-Intervall (24) angewendet wird, dessen Dauer ($\Delta$T) kleiner oder gleich der Abtast-Periode T ist, wobei das Verfahren **dadurch gekennzeichnet ist, dass** in jedem Abtast-Intervall (22, 32) wenigstens einer von dem Anfangs-Zeitpunkt (25, 34) und dem End-Zeitpunkt (26) der Anwendung des Inkrements (23, 33) durch Hinzufügen eines als zufälliger Abstand (28, 35) bezeichneten, zufälligen oder pseudo-zufälligen variablen Zeitabstands (dT) verändert wird.

**2.** Verfahren nach Anspruch 1,
**dadurch gekennzeichnet, dass** die Anwendungsdauer der Inkremente (33) gleich der Abtast-Periode T ist, und ein zufälliger Abstand (35) zu dem Anfangs-Zeitpunkt (34) der Anwendung der Inkremente (33) hinzugefügt wird.

**3.** Verfahren nach Anspruch 1,
**dadurch gekennzeichnet, dass** die Anwendungsdauer ($\Delta$T) der Inkremente (23) streng kleiner als die Abtast-Periode T ist, und ein zufälliger Abstand (28) entweder dem Anfangs-Zeitpunkt (25), oder dem End-Zeitpunkt (26) oder den zwei Anfangs- (25) und End-Zeitpunkten (26) der Anwendung der Inkremente (23) hinzugefügt wird, mit Werten, die in letzterem Fall unterschiedlich sein können.

**4.** Verfahren nach Anspruch 3,
**dadurch gekennzeichnet, dass** in jedem Abtast-Intervall (22) der gleiche zufällige Abstand (28) zugleich dem Anfangs-Zeitpunkt (25) und dem End-Zeitpunkt (26) der Anwendung der Inkremente (23) hinzugefügt wird.

**5.** Verfahren nach einem der Ansprüche 1 bis 4,
**dadurch gekennzeichnet, dass** ein zum Bestimmen des zufälligen Abstands (28, 35) ausgewähltes Wahrscheinlichkeitsgesetz so definiert ist, dass wenigstens eine der Energiespitzen der Steuerung/Regelung verändert wird.

**6.** Verfahren nach einem der Ansprüche 1 bis 5,
**dadurch gekennzeichnet, dass** der absolute Maximalwert des zufälligen Abstands (28, 35) kleiner als ein fester Wert ist, vorzugsweise ein ganzzahliger Bruchteil der Abtast-Periode T.

7. Verfahren nach einem der Ansprüche 1 bis 6,
   **dadurch gekennzeichnet, dass** der zufällige Abstand (28, 35) im Mittel Null ist.

8. Verfahren nach einem der Ansprüche 1 bis 7, **dadurch gekennzeichnet, dass** die Werte des zufälligen Abstands (28, 35) aus den ganzzahligen Vielfachen eines vorbestimmten Wertes T' ausgewählt sind.

9. Verfahren nach Anspruch 8,
   **dadurch gekennzeichnet, dass** der vorbestimmte Wert T' ein ganzer Teiler der Abtast-Periode T ist.

10. Verfahren nach einem der Ansprüche 8 und 9,
    **dadurch gekennzeichnet, dass** die Frequenz 1/T' so ausgewählt ist, dass die möglichen Resonanzen mit den Schwingungsmoden des flexiblen Strukturelements (25) begrenzt werden und sie vorzugsweise nicht mit den Eigenfrequenzen der Schwingungsmoden übereinstimmt.

11. Verfahren nach einem der Ansprüche 1 bis 10,
    **dadurch gekennzeichnet, dass** ein zum Bestimmen des zufälligen Abstands (28, 35) ausgewähltes Wahrscheinlichkeitsgesetz vollständig durch eine endliche Anzahl von Parametern bestimmt ist, die berechnet werden, um wenigstens eine der Energiespitzen der Steuerung/Regelung zu verändern.

12. Verfahren nach einem der Ansprüche 1 bis 11,
    **dadurch gekennzeichnet, dass** ein zum Bestimmen des zufälligen Abstands (28, 35) ausgewähltes Wahrscheinlichkeitsgesetz ein diskretes Wahrscheinlichkeitsgesetz mit M Werten ist, wobei die M Werte und ihre Wahrscheinlichkeiten berechnet werden, um wenigstens eine der Energiespitzen der Steuerung/Regelung zu verändern.

13. Verfahren nach Anspruch 12,
    **dadurch gekennzeichnet, dass** das Wahrscheinlichkeitsgesetz ein binomisches Gesetz ist, welches Extremwerte für den zufälligen Abstand (28, 35) +dTmax mit einer Wahrscheinlichkeit von 1/2 und -dTmax mit einer Wahrscheinlichkeit von 1/2 annimmt.

14. Verfahren nach Anspruch 12,
    **dadurch gekennzeichnet, dass** das Wahrscheinlichkeitsgesetz ein diskretes Gesetz mit M gleich wahrscheinlichen Werten ist, in arithmetischer Folge zwischen einem Minimalwert -dTmax und einem Maximalwert +dTmax für die zufälligen Abstände (28, 35), mit dTmax =T.(M-1)/2M.

15. Verfahren nach einem der Ansprüche 1 bis 11,
    **dadurch gekennzeichnet, dass** ein zum Bestimmen des zufälligen Abstands (28, 35) ausgewähltes Wahrscheinlichkeitsgesetz ein gleichförmiges Gesetz zwischen Extremwerten für den zufälligen Abstand dTmin und dTmax ist, wobei die Werte dTmin und dTmax ausgewählt sind, um wenigstens eine Energiespitze der Steuerung/Regelung zu verändern.

16. Verfahren nach Anspruch 15,
    **dadurch gekennzeichnet, dass** das Wahrscheinlichkeitsgesetz ein gleichförmiges Gesetz zwischen Maximalwerten -dTmax und dTmax ist.

17. Verfahren nach Anspruch 16 unter Rückbeziehung auf Anspruch 4,
    **dadurch gekennzeichnet, dass** dTmax = T/2, so dass das Spektrum der Regelung/Steuerung keine Linie bei der Abtast-Frequenz 1/T umfasst.

18. Verfahren nach Anspruch 16 unter Rückbeziehung auf Anspruch 4,
    **dadurch gekennzeichnet, dass** dTmax = T/4, so dass das Spektrum der Steuerung/Regelung keine Linie bei den ungeradzahligen vielfachen Frequenzen der Abtast-Frequenz 1/T umfasst.

19. Verfahren nach einem der Ansprüche 1 bis 18,
    **dadurch gekennzeichnet, dass** die zufälligen Abstände (28, 35) die aufeinander folgenden Zahlenwerte von wenigstens einer zufälligen oder pseudo-zufälligen Zahlenfolge annehmen, die zu jeder Abtast-Periode durch wenigstens ein Informatik-Programm erzeugt werden, welches Zufallszahlen oder Pseudo-Zufallszahlen erzeugt.

**20.** Verfahren nach einem der Ansprüche 1 bis 18, **dadurch gekennzeichnet, dass** die zufälligen Abstände (28, 35) die aufeinander folgenden Zahlenwerte einer langen aber endlichen Folge von Zahlen annehmen, welche zufällige Merkmale nahe an gewünschten Merkmalen aufweisen, wobei die Folge zuvor berechnet und dem Verfahren folgend angewendet wird, und dann, sobald sie einmal beendet ist, in einer Schleife reproduziert wird.

**21.** Computer-Programm-Produkt, umfassend Code-Anweisungen, welche die Durchführung des Verfahrens nach einem der Ansprüche 1 bis 20 umsetzen, wenn es auf Informatik-Mitteln geladen und ausgeführt wird.

**22.** Vorrichtung zur Durchführung des Verfahrens nach einem der Ansprüche 1 bis 20, umfassend:

a) ein mechanisches System (1) mit wenigstens einem flexiblen Strukturelement (2, 5) und wenigstens einem Aktuator oder einer Gruppe von Aktuatoren (3, 4), wobei die Vorrichtung dazu bestimmt ist, das Schwingungsniveau des flexiblen Strukturelements (2, 5) zu reduzieren, wobei der Aktuator oder die Gruppe von Aktuatoren (3, 4) gesteuert/geregelt wird, um wenigstens ein dem mechanischen System (1) zugeordnetes Ziel zu erreichen, beispielsweise eine Verlagerung auszuführen, wobei die Steuerung/Regelung aus Inkrementen (23, 33) zusammengesetzt ist, die in einer als Abtast-Periode bezeichneten Periode T ausgeführt werden müssen;
b) Berechnungs- und Informatik-Mittel und dazu geeignet, die Inkremente (23, 33) für die Steuerung/Regelung von wenigstens einem von dem Aktuator und der Gruppe von Aktuatoren (3, 4) des mechanischen Systems (1) zu erzeugen, wobei jedes der Inkremente (23, 33) in einem als Abtast-Intervall (22, 32) bezeichneten Zeitintervall konstant in der Amplitude ist, welches sich zwischen zwei aufeinanderfolgenden Abtast-Zeitpunkten erstreckt, und jedes der Inkremente (23, 33) während einem Inkrement-Anwendungs-Intervall (24) von einer Dauer ($\Delta$T) angewendet wird, die kleiner oder gleich der Abtast-Periode T ist;
wobei die Berechnungs- und Informatik-Mittel dazu geeignet sind, so die effektiv auf das mechanische System (1) anzuwendende numerische Steuerung/Regelung zu erzeugen,
c) elektrische oder/und elektronische Mittel, welche es ermöglichen, die von den Berechnungs- und Informatik-Mitteln ausgearbeiteten numerischen Steuer-/Regelbefehle in elektrische Signale umzusetzen, die an wenigstens einen von dem Aktuator (3, 4) und der Gruppe von Aktuatoren (3, 4) gesendet werden, um die zugewiesene Steuerung/Regelung physisch auszuführen;
**dadurch gekennzeichnet, dass** die Berechnungs- und Informatik-Mittel dazu geeignet sind:

- in jeder Abtast-Periode T den zufälligen Abstand (28, 35) gemäß einem Wahrscheinlichkeitsgesetz zu erzeugen, welches sich am bestens an ein gewünschtes Wahrscheinlichkeitsgesetz annähert,
- wenigstens einen der Anfangs- und End-Zeitpunkte (25, 26, 34) der Anwendung des Inkrements (23, 33) zu verändern, indem ihm in jedem Abtast-Intervall (22, 32) ein zufälliger oder pseudozufälliger, variabler Zeitabstand (dT), das heißt der zufällige Abstand (28, 35) hinzugefügt wird.

**23.** Vorrichtung nach Anspruch 22 für die Durchführung des Verfahrens nach Anspruch 20, **dadurch gekennzeichnet, dass** eine lange, aber endliche Folge von zufälligen Abständen (28, 35) mit den gewünschten zufälligen Merkmalen zuvor berechnet und dann in einem Speicher (9) der Berechnungs- und Informatik-Mittel (8) gespeichert wird, wobei die zufälligen Abstände (28, 35) nacheinander und gemäß einer festgelegten Reihenfolge zu wenigstens einem Anwendungs-Zeitpunkt (25, 26, 34) der Inkremente (23, 33) der Steuerung/Regelung hinzugefügt werden, wobei die Folge, sobald sie fertiggestellt ist, in einer Schleife reproduziert wird.

**24.** Vorrichtung nach Anspruch 22, **dadurch gekennzeichnet dass** wenigstens ein Teil der Parameter, die in die Berechnung der zufälligen Abstände (28, 35) durch das Informatik-Programm eingehen, beispielsweise die Parameter eines Wahrscheinlichkeitsgesetzes oder eine Folge von zufälligen Werten, im Laufe des Betriebs des mechanischen Systems (1) verändert werden kann, um insbesondere die Effizienz des Verfahrens zu optimieren.

**25.** Vorrichtung nach Anspruch 24, **dadurch gekennzeichnet, dass** sie wenigstens einen Sensor (10) umfasst, der dazu bestimmt ist, Schwingungen von wenigstens einem flexiblen Strukturelement (2, 5) zu messen, welches in dem mechanischen System (1) vorhanden ist, Mittel zur Berechnung des Frequenzspektrums dieser Schwingungen und Mittel zur Veränderung von Parametern, die in die Berechnung der zufälligen Abstände (28, 35) eingehen, um das Niveau der Schwingungen zu reduzieren, indem wenigstens eine der Energiespitzen des Frequenzspektrums der Regelung/Steuerung verändert wird.

**26.** Anwendung des Verfahrens nach einem der Ansprüche 1 bis 20,

**dadurch gekennzeichnet, dass** sie darin besteht, die Öffnung von wenigstens einer Düse (3) eines Systems zur Orbit-Steuerung/Regelung, zur Stabilisierung und/oder Orientierung eines Geräts (1), das sich im Raum bewegt, zu steuern/regeln, beispielsweise einer Trägerrakete, eines künstlichen Satelliten, einer interplanetaren Sonde, wobei das Gerät (1) wenigstens ein flexibles Strukturelement aufweist, zum Beispiel große Fortsätze, eine Antenne (5), ein Solarpanel (2) und eine primäre Struktur.

**27.** Anwendung nach Anspruch 26, **dadurch gekennzeichnet, dass** sie darin besteht

- die Öffnung von wenigstens einer Düse (3) zu steuern/regeln, um dem Gerät (1) ein Geschwindigkeits-Inkrement aufzuprägen, was es erlaubt, die Trajektorie des Geräts (1) zu korrigieren,
- das Geschwindigkeits-Inkrement in einer Folge von kleinen, mit einer Periode T periodisch ausgeführten Inkrementen nominell zu verwirklichen,
- die kleinen Inkremente durch die Regelung/Steuerung (7) der Öffnung von wenigsten einer Düse (3) zu verwirklichen, wobei die Regelung/Steuerung konventionell gleich 0 ist für einen Befehl, die Düse (3) zu schließen, und gleich 1 ist für einen Befehl, die Düse (3) zu öffnen,
- vor der Durchführung des Verfahrens, eine nominelle Regelung/Steuerung zu berechnen, so dass diese mit einer Periode T periodisch ist in dem Zeitintervall [Ti, Ti+N.T], wobei N eine ganze Zahl ist, zur Verwirklichung eines Gesamtimpulses, und, in dem Zeitintervall, gleich einem Inkrement von 1 in allen Teilintervallen [Ti+k.T+T1, Ti+k.T+T2] ist, wobei k eine ganze Zahl kleiner als N ist, und wobei T1 und T2 Konstanten sind, zum Beispiel 0<T1 <T2<T, wobei T2-T1 die Größe ($\Delta$T) des Regelungs/Steuerung-Intervalls (24) ist, welches die kleinen Impulse verwirklicht, und gleich 0 im Rest der Zeit ist;
- Verändern der nominellen Regelung/Steuerung gemäß dem Verfahren nach einem der Ansprüche 1 bis 20, indem wenigstens einem vom dem Anfangs-Zeitpunkt (25) Ti+k.T+T1 und End-Zeitpunkt (26) Ti + k.T + T2 der Anwendung des Inkrements ein zufälliger zeitlicher Abstand (28, 35) hinzugefügt wird, der gewünschte Merkmale aufweist, mit dem Ziel, die Resonanzen der Regelung/Steuerung mit den Schwingungsmoden des flexiblen Strukturelements (2, 5) zu minimieren; und
- in dem Fall, in welchem ein zufälliger Abstand (28) auf die zwei Anfangs- (25) und End-Zeitpunkte (26) der Anwendung des Inkrements angewendet wird, der zufällige Abstand (28) für die zwei Zeitpunkte gleich sein kann, in welchem Fall das Steuerungs/Regelungs-Intervall (24) einfach zufällig in der Zeit versetzt wird, oder auch für den einen verschieden sein kann, von dem, was er für den anderen der zwei Zeitpunkte (25, 26) ist.

**28.** Anwendung nach Anspruch 27,
**dadurch gekennzeichnet, dass** zusätzlich zu den zufälligen Abständen (28, 35), einem einzigen von dem Anfangs-Zeitpunkt (25) und dem End-Zeitpunkt (26) der Anwendung des Inkrements ein anderer zeitlicher Abstand hinzugefügt wird, der auf bekannte Weise berechnet wird, um eine Regelung/Steuerung der Stellung oder der Ausrichtung des Raum-Geräts (1) zur gleichen Zeit durchzuführen, in der die Regelung/Steuerung des Geschwindigkeits-Inkrements für die Orbit-Regelung/Steuerung durchgeführt wird.

**29.** Anwendung des Verfahrens nach einem der Ansprüche 1 bis 20,
**dadurch gekennzeichnet, dass** sie darin besteht, die Drehung von wenigstens einem Schrittmotor (4) zu regeln/steuern, für die Ausrichtung von wenigstens einer Nutzlast eines Raum-Geräts (1), so wie wenigstens eines Solarpanels (2), einer Antenne (5), eines Instruments, wobei die Nutzlast wenigstens ein flexibles Strukturelement (2) aufweist.

**30.** Anwendung nach Anspruch 29, **dadurch gekennzeichnet, dass**

- eine Regelung/Steuerung $\alpha$ des Winkels zwischen dem Stator und dem Rotor des Motors (4) mit einer Abtast-Periode T abgetastet wird, und in jeder Abtast-Periode um einen gewissen Wert zunimmt,
- eine nominelle Regelung/Steuerung $\alpha$ sich in der Form: $\alpha_k = \alpha_{k-1} + (d\alpha)_k$ darstellt, wobei $\alpha_k$ den konstanten Wert der Regelung/Steuerung zwischen den Zeitpunkten k.T und (k+1).T darstellt, wobei k eine ganze Zahl ist und $(d\alpha)_k$ der Wert des zu der Zeit k.T zu verwirklichenden Inkrements ist, wobei die Inkremente per Konvention zu den Abtast-Zeitpunkten (34) durchgeführt werden,
- die Regelung/Steuerung gemäß dem Verfahren nach einem der Ansprüche 1 bis 20 verändert wird, indem den Zeitpunkten k.T der Verwirklichung (34) der Inkremente ein zufälliger zeitlicher Abstand (35) hinzugefügt wird, der gewünschte Merkmale aufweist, mit dem Ziel, Resonanzen mit Schwingungsmoden des flexiblen Strukturelements (2) zu minimieren.

**31.** Anwendung nach Anspruch 30,

**dadurch gekennzeichnet, dass** die Inkremente (d $\alpha)_k$ alle gleich sind, wie in dem Fall der Aufrechterhaltung einer Drehung eines Solarpanels (2) mit konstanter Geschwindigkeit.

32. Anwendung nach Anspruch 30, **dadurch gekennzeichnet, dass** die nominell gleichen Inkremente (d $\alpha)_k$ auf bekannte Weise leicht modifiziert werden, um die Regelung/Steuerung von wenigstens einem physischen Phänomen zu verwirklichen, das aus der Drehung des Motors (4) resultiert, wie die Steuerung eines Satelliten (1) mit Sonnensegel in dem Fall der Regelung/Steuerung eines Solarpanels (2), welches mit wenigstens einer Klappe ausgerüstet ist.

33. Anwendung nach einem der Ansprüche 31 und 32, **dadurch gekennzeichnet, dass** das Frequenzspektrum der nominellen Regelung/Steuerung, die auf den Motor (4) anzuwenden ist, hauptsächlich bei Frequenzen stark unterhalb der Abtast-Frequenz liegt, insbesondere um eine Abtastungsbewegung mit niedriger Geschwindigkeit durchzuführen.

FIG. 1a

EP 1 967 450 B1

**FIG. 1b**

EP 1 967 450 B1

EP 1 967 450 B1

FIG. 2a

(ETAT DE LA TECHNIQUE)

FIG. 2b

25

FIG. 2c

FIG. 3a
(ETAT DE LA TECHNIQUE)

FIG. 3b

FIG. 4a
(ETAT DE LA TECHNIQUE)

FIG. 4b

FIG. 4c

**EP 1 967 450 B1**

**RÉFÉRENCES CITÉES DANS LA DESCRIPTION**

**Documents brevets cités dans la description**

- EP 0251692 A
- US 5601848 A
- US 20040049527 A